# EUROPEAN PATENT SPECIFICATION

(11) **EP 3 379 222 B1**
(45) Date of publication and mention of the grant of the patent: **30.12.2020**
(21) Application number: 17162429.9
(22) Date of filing: 22.03.2017
(51) Int. Cl.: G01L 1/12, G01L 5/16, G01L 5/169, G01L 5/00, B60D 1/24, B60D 1/62, G01L 5/13, B60D 1/52

(54) **MAGNETOELASTIC BASED SENSOR ASSEMBLY**
AUF MAGNETOELASTIK BASIERTE SENSORANORDNUNG
ENSEMBLE DE CAPTEUR À BASE MAGNÉTOÉLASTIQUE

(43) Date of publication of application: 26.09.2018
(73) Proprietor: Methode Electronics Malta Ltd., Birkirkara CBD 4070 (MT)
(72) Inventor: GIESSIBL, Johannes, 83123 Amerang (DE)
(74) Representative: Prinz & Partner mbB

(56) References cited:
- EP-A2- 0 341 459
- DE-A1-102006 058 439
- US-A- 5 593 171
- US-A1- 2011 221 164
- US-A1- 2014 360 282

## Description

### FIELD

The invention is related in general to systems and methods involving the use of magnetic field sensors for measuring a load. In particular, the invention relates to a magnetoelastic based sensor assembly, i.e. a sensor assembly comprising a magneto-elastically active region and a tow coupling incorporating this sensor assembly. Furthermore, the invention relates to a method of determining a direction of a load vector.

### BACKGROUND

In many use cases strain gauges are used for sensing a load. However, strain gauges often require a structural weakening of the load conducting elements. Often, there is a need for load measurements without compromising on structural stability.

This is especially true for tow couplings. Conventional trailer hitch couplings are known from US 5,593,171 and US 2011/0221164 A1. Furthermore, there is a strong demand for smart tow couplings, e.g. for systems providing a load weight gauge (measuring the tongue load of a tow coupling), a tow load weight shift alert, an unsafe trailer load distribution alert, a vehicle limit notification, an automated trailer brake control (closed loop), a low/flat trailer tire notification, and a check trailer brake notification, closed loop braking control, vehicle shift control, engine control, and stability control. The above discussed functions require the measurement of tow loads and/or tongue loads of the tow coupling.

Prior art load measurement devices for tow couplings have significant shortcomings, e.g. the complexity of the measurement and control devices, and the costs of the sensor assembly. EP 0 341 459 A2 discloses a tractor with an implement attached, in which the function of active oscillation damping in the digging position can be performed more effectively and more reliably when cornering with the aid of the electrohydraulic lifting-mechanism control device. Forces transmitted to the tractor housing by lateral guide members when cornering lead to brief signal droops in the force-measuring bolts that support the lower connecting rods and measure horizontal forces. Situated in the force-control circuit decisive for oscillation damping is a low-pass filter which serves for the determination of the dynamic force component and the time constant of which is charged as a function of the actual position value in such a way that, at the end of the corner, relatively small deviations of the force and hence relatively small amplitudes of the lifting mechanism about the mean digging position occur, with the result that active oscillation damping is virtually unimpaired when cornering.

As an alternative to the widely used strain-gauges, non-contact type sensors exploiting the magnetoelastic effect were developed. These are frequently applied to torque measurements of rotating shafts in various mechanic systems. US 9,347,845 and US 2014/0360282 A1 disclose such a magnetoelastic sensor.

### SUMMARY

It is an object of the invention to provide an improved magnetoelastic based sensor assembly according to claim 1 to effectively measure stress and strain in systems having a portion which is subject to a mechanic load.

According to the invention, a sensor assembly for force sensing comprises a first portion having a first and a second through hole. The sensor assembly further comprises comprise a second portion having a third and a fourth through hole. The third and the fourth through holes are positioned in correspondence to the first and the second through holes. The sensor assembly further comprises a first pin and a second pin. The first pin is arranged such that it extends through the first and the third through holes and the second pin is arranged such that it extends through the second and the fourth through holes, so as to couple the first portion to the second portion. The first and the second pins comprise at least one magneto-elastically active region that is directly or indirectly attached to or form a part of the pin in such a manner that mechanic stress on the pin is transmitted to the magneto-elastically active region. The magneto-elastically active region comprises at least one magnetically polarized region such that a polarization of the magnetically polarized region becomes increasingly helically shaped as the applied stress increases. The sensor assembly further comprises a magnetic field sensor means which is arranged approximate the at least one magneto-elastically active region. The magnetic field sensor means is configured to output a signal corresponding to a stress-induced magnetic flux which emanates from the magnetically polarized region. The magnetic field sensor means comprises at least one direction sensitive magnetic field sensor which is configured to determine a shear force in at least one direction. The at least one direction sensitive magnetic field sensor is arranged to have a predetermined and fixed spatial coordination with the pin, wherein this pin is at least partially hollow.

The at least one direction sensitive magnetic field sensor is arranged inside an interior of this pin. By means of the sensor assembly stress which is applied to a pin caused by a mechanic load is effectively measured. The sensor assembly according to aspects of the invention overcomes the drawback of the prior art solutions. In particular, the sensor assembly does not tend to drift with respect to the measurement values and is less error-prone.

According to the invention, at least one out of the first and the second pin of the sensor assembly comprises at least one X-direction sensitive magnetic field sensor, which is configured to detect a force component Fx1 in a longitudinal direction X, and at least one Z-direction sensitive magnetic field sensor, which is configured to detect a force component Fz1 in a vertical direction Z. The longitudinal direction X is defined by a direction of longitudinal extension of the second portion. The vertical direction Z is substantially perpendicular to the longitudinal direction X and substantially perpendicular to the transversal direction Y of longitudinal extension of the at least one pin.

According to another aspect, the first through hole and the third through hole of the sensor assembly can be configured such that they encompass the first pin in a positive-fitting manner. A positive-fitting manner of the fitting allows the pin to be substantially rigidly fixed to the first portion and the second portion by the first and the third through hole. This means that the pin has almost no play inside the first and third through hole and that the accuracy of the force measurement is advantageously increased compared to a configuration in which the first pin has play inside the first and the third through hole.

According to another aspect, the second pin of the sensor assembly may be encompassed by the second through hole in a positive-fitting manner and the fourth through hole may be configured such that the second pin may have one additional degree of freedom of movement within the fourth through hole. The additional degree of freedom of movement allows the second pin to be insensitive with respect to shear forces acting in the direction of the additional degree of freedom of movement. This means that the determination of the shear force along this direction can advantageously be simplified since the shear effect occurs exclusively on the first pin.

According to another aspect, the additional degree of freedom of movement may extend in the longitudinal direction X. Since the additional degree of freedom of movement corresponds to the longitudinal direction X, the determination of the shear force along this direction can advantageously be simplified.

According to another aspect, the first and/or the second pin of the sensor assembly can comprise a first magneto-elastically active region and a second magneto-elastically active region. The first and the second magneto-elastically active regions may be directly or indirectly attached to or form parts of the pin in such a manner that mechanic stress may be transmitted to the magneto-elastically active regions. Each magneto-elastically active region can comprise a magnetically polarized region. Particularly, the magnetic polarization of the first magneto-elastically active region and the magnetic polarization of the second magneto-elastically active region may be substantially opposite to each other. The magnetic field sensor means can comprise at least one first direction sensitive magnetic field sensor which may be arranged approximate the first magneto-elastically active region. The magnetic field sensor means may be configured to output a first signal corresponding to a stress-induced magnetic flux which may emanate from the first magneto-elastically active region. The magnetic field sensor means may comprise at least one second direction sensitive magnetic field sensor which may be arranged approximate the second magneto-elastically active region. The magnetic field sensor means may be configured to output a second signal corresponding to a stress-induced magnetic flux which may emanate from the second magneto-elastically active region. This way, the shear force can advantageously be determined in two opposing directions thereby improving the quality of the determination of the shear force. This "vice versa" configuration of the magnetic field sensors enables the shear directions to be determined by the magneto-elastically active regions. For example, the directions may be distinguishable, if the measurement data, which is acquired from the first direction sensitive magnetic field sensor and the second direction sensitive magnetic field sensor, is differentially processed.

The differential evaluation of the signals advantageously doubles the signal, which is correlated with the applied stress. Because the polarization of the first and second magneto-elastically active region is opposite to each other, theoretically possible external fields may be compensated. The sensor assembly according to this embodiment may be more sensitive and less susceptible to errors.

According to another aspect, the first and/or the second pin of the sensor assembly can comprise at least one first X-direction sensitive magnetic field sensor and/or at least one second X-direction sensitive magnetic field sensor and/or at least one Z-direction sensitive magnetic field sensor and/or at least one second Z-direction sensitive magnetic field sensor. The at least one X-direction sensitive magnetic field sensor may be configured to detect a force component Fx1 in the first magneto-elastically active region in the longitudinal direction X of the second portion. The at least one second X-direction sensitive magnetic field sensor may be configured to detect a force component Fx2 in the second magneto-elastically active region in the longitudinal direction X of the second portion. The at least one Z-direction sensitive magnetic field sensor may be configured to detect a force component Fz1 in the first magneto-elastically active region in the vertical direction Z. The at least one second Z-direction sensitive magnetic field sensor may be configured to detect a force component Fz2 in the second magneto-elastically active region in the vertical direction Z. Advantageously, the shear force can be determined in different directions being perpendicularly aligned with respect to each other.

According to another aspect, the first pin of the sensor assembly can comprise the at least one Z-direction sensitive magnetic field sensor and the at least one second Z-direction sensitive magnetic field sensor. Advantageously, the first pin can be configured to exclusively react on a shear force acting along the Z-direction.

According to another aspect, the first pin of the sensor assembly can comprise the at least one first X-direction sensitive magnetic field sensor, the at least one second X-direction sensitive magnetic field sensor, the at least one first Z-direction sensitive magnetic field sensor and the at least one second Z-direction sensitive magnetic field sensor and the second pin of the sensor assembly can comprise the at least one Z-direction sensitive magnetic field sensor and the at least one second Z-direction magnetic field sensor. Advantageously, the first pin can be configured to exclusively react on the shear effect along the X-direction which simplifies the shear force evaluation, wherein the shear force along the vertical Z-direction is acting on both pins.

According to another aspect the first pin of the sensor assembly can comprise the at least one first X-direction sensitive magnetic field sensor, the at least one second X-direction sensitive magnetic field sensor, the at least one first Z-direction sensitive magnetic field sensor and the at least one second Z-direction sensitive magnetic field sensor and the second pin of the sensor assembly can comprise the at least one first X-direction sensitive magnetic field sensor, the at least one second X-direction sensitive magnetic field sensor, the at least one first Z-direction sensitive magnetic field sensor and the at least one second Z-direction sensitive magnetic field sensor. This way, both pins are sensitive to all shear forces along the vertical Z-direction as well as along the longitudinal X-direction. The first and the second pin advantageously can detect the different components of the shear force at different positions of the system.

The magnetic field sensor means may be configured for determination of a first component and a second component of the load, which is applied to the pin. In particular, the at least one first X-direction sensitive magnetic field sensor and the at least one second X-direction sensitive magnetic field sensor can form a first group of sensors and the at least one first Z-direction sensitive magnetic field sensor and the at least one second Z-direction sensitive magnetic field sensor can form a second group of sensors. The first group of sensors is suitable for determination of a load component, which is directed along the X-axis. The second group of sensors senses a component of the load, which is substantially perpendicular to the first component along the Z-direction. Consequently, the direction and the value of the stress or force, which is applied to the pins, may be determined from said components in this coordinate system.

According to another aspect, the second portion of the sensor assembly can comprise a center wall which may extend in the longitudinal direction X and the vertical direction Z. The third and the fourth through hole may also extend through the center wall. Advantageously, the center wall allows the first portion to be effectively affected by the shear force at an additional point of action.

According to another aspect, the first and/or the second pin of the sensor assembly may be fixedly attached in a predetermined manner to the first portion. The first and/or the second pin can advantageously be fixedly attached in all six degrees of freedom. This way, the determination of the shear forces is effectively possible since the pins do not have play inside the through holes of the first portion.

According to another aspect, the first portion of the sensor assembly can have a yoke-like shape. The yoke legs of the first portion can comprise the first and the second through holes. The second portion of the sensor assembly can have a tubular shape. The side walls of the second portion can comprise the third and fourth through holes. The direction sensitive magnetic field sensor(s) may be configured to detect force components of shear forces introduced into the pins by the first portion and the second portion. Advantageously, a yoke-like shape of the first portion and a tubular shape of the second portion allow the sensor assembly to be implemented in an elongated joint connection of two objects, whereas the pins are arranged in the through holes and connect both objects.

According to another aspect, the first portion of the sensor assembly can have a yoke-like shape. The yoke legs of the first portion can comprise the first and the second through holes. The center wall can comprise the third and fourth through holes. The direction sensitive magnetic field sensor(s) may be configured to detect force components of shear forces introduced into the pins by the first portion and the second portion. In particular, the side walls of the second portion can comprise through holes which may be larger than the third and the fourth through holes such that the shear forces may be introduced into the pins by abutment surfaces of the first and the second through holes in the yoke legs and abutment surfaces of the third and the fourth through holes in the center wall. The abutment surfaces allow the transmission of power between the first portion and the second portion to be configured in an advantageous manner.

According to another aspect, a tow coupling can comprise a sensor assembly wherein the first portion is a hitch assembly that may be configured to be attached to a car chassis and wherein the second portion may be a receiving tube which may be configured to receive a draw bar, alternatively a hitch bar or a ball mount of the tow coupling. Advantageously, the sensor assembly is configured to detect the forces of a tow coupling of an automobile, which may be part of a land based on-road or off-road vehicle.

According to another aspect, the first portion of the sensor assembly may be a supporting yoke having two yoke legs. The yoke legs may comprise recesses which are aligned in correspondence to each other and which represent the first and the second through holes of the first portion.

According to another aspect, the first portion of the sensor assembly may be a supporting yoke having two or four yoke legs. The yoke legs may comprise recesses which are aligned in correspondence to each other and which represent the first and the second through holes of the first portion.

According to another aspect, the sensor assembly dispenses with a mechanical linkage or connection between the magnetic field sensor means and the second portion. This eliminates sources of error, which result from mechanic failure of this connection. The sensor assembly reliably operates even under extreme operating conditions. The drift of the measurement values during long term measurement is reduced. The sensor assembly according to aspects of the invention is versatile in that it may be applied to or integrated in nearly every tubular shaped portion, which may be for example a part of a hydraulic unit of a land-, marine-, rail- or air transport vehicle.

According to another aspect the forces which are detectable by the sensor assembly are not exclusively restricted to shear forces which originate from shear stress but may also originate due to tensile or compressive stress acting on the magneto-elastically active region(s) of the first pin and/or the second pin of the sensor assembly. In other words, shear stress and normal stress may both induce a variation of the polarization of the magnetically polarized region emanating from the magneto-elastically active region(s). This polarization may be detectable by the magnetic field sensor means which may output a signal corresponding to a stress-induced magnetic flux towards the polarization direction sensitive magnetic field sensor that may be configured to determine the acting force. Consequently, the magneto-elastically active region may be sensitive to all stress types. The embodiment may particularly be suitable, if the pin is exposed to only one single type of stress.

According to another aspect, the direction sensitive magnetic field sensors may be one of a Hall-effect, magneto-resistance, magneto-transistor, magneto-diode, MAGFET field sensors or fluxgate magnetometer. These aspects advantageously apply to all embodiments of the invention.

According to another aspect, any hydraulic piston, crane application, car and other various applications incorporating bolts and pins, where shear forces may be applied, may be equipped with the sensor assembly according to aspects of the invention. Traditionally, shear force sensors using strain-gauges are designed in that they get intentionally weaken to provide enough deformation so as to allow a measurement of the applied loads. The magneto-elastically active region of the sensor assembly, however, provides the possibility to design the bolt without weaken locations and significantly higher overload capability. The load pin having the integrated magneto-elastically active region provides the possibility to detect shear forces in pins, screws, bolts etc.

According to another aspect, a method of determining a direction of a load vector is provided. Within said method, a sensor assembly according to aspects of the invention is provided. In other words, a sensor assembly is provided which can comprise a first portion having a first and a second through hole. The sensor assembly can further comprise a second portion having a third and a fourth through hole. The third and the fourth through hole can be positioned in correspondence to the first and the second through hole. The sensor assembly can further comprise a first pin and a second pin. The first pin can be arranged such that it extends through the first and the third through hole and the second pin can be arranged such that it extends through the second and the fourth through hole, so as to couple the first portion to the second portion. At least one out of the first and the second pin can comprise at least one magneto-elastically active region that may directly or indirectly be attached to or form a part of the pin in such a manner that mechanic stress on the pin is transmitted to the magneto-elastically active region. The magneto-elastically active region can comprise at least one magnetically polarized region such that a polarization of the magnetically polarized region may become increasingly helically shaped as the applied stress increases. The sensor assembly can further comprise a magnetic field sensor means which may be arranged approximate the at least one magneto-elastically active region. The magnetic field sensor means may be configured to output a signal corresponding to a stress-induced magnetic flux which may emanate from the magnetically polarized region. The magnetic field sensor means may comprise at least one direction sensitive magnetic field sensor which may be configured to determine a shear force in at least one direction. The at least one direction sensitive magnetic field sensor may in particular be arranged to have a predetermined and fixed spatial coordination with the pin, wherein this pin may at least be partially hollow. The at least one direction sensitive magnetic field sensor may be arranged inside an interior of this pin.

Furthermore, within the method according to another aspect, the first pin and the second pin may be exposed to a load. Measurement data of the at least one direction sensitive magnetic field sensor may be processed so as to determine a shear stress and/or a tensile or compressive stress that is applied by the second portion and the first portion to the first and/or second pin 8, 9.

In particular, a direction of a force F may be determined from the measurement data on the one hand and the predetermined and known spatial coordination between the direction sensitive magnetic field sensor(s), the first pin, the second pin and the point of load.

The force F is applied to the sensor assembly via the second portion 5.

Same or similar advantages which have been already mentioned with respect to the sensor assembly comprising a magneto-elastically active region according to aspects of the invention apply in a same or similar way to the method of determining a direction of the load vector and will be not repeated.

### BRIEF DESCRIPTION OF DRAWINGS

Further aspects and characteristics of the invention ensue from the following description of the preferred embodiments of the invention with reference to the accompanying drawings, wherein
FIG. 1 is a simplified perspective view of a tow coupling comprising a sensor assembly for force sensing,
FIG. 2 is a simplified exploded view of the tow coupling,
FIG. 3 is a simplified exploded perspective view of a second portion,
FIG. 4 is a simplified cross-sectional view of a sensor assembly,
FIG. 5a is a simplified cross-sectional view of a pin,
FIG. 5b is another simplified cross-sectional view of the pin,
FIG. 6 is a simplified cross-sectional view of a sensor assembly for force sensing,
FIG. 7 is another simplified cross-sectional view of the sensor assembly,
FIG. 8 is a simplified cross-sectional view of a sensor assembly for force sensing,
FIG. 9 is a simplified side view of a sensor assembly detecting a first simplified load case,
FIG. 10 is a simplified top view of a sensor assembly detecting a second simplified load case,
FIG. 11 is a simplified top view of a sensor assembly detecting a third simplified load case,
FIG. 12 is a simplified cross-sectional view of a sensor assembly configured to detect a vertical load component Fz of a load F,
FIG. 13 is a simplified cross-sectional view of a sensor assembly configured to detect a vertical load component Fz, a transversal load component Fy, and a longitudinal load component Fx of a load F,
FIG. 14 is a simplified cross-sectional view of a sensor assembly configured to detect a vertical load component Fz, a transversal load component Fy, and a longitudinal load component Fx of a load F,
FIG. 15 is a simplified cross-sectional view of a sensor assembly configured to detect a vertical load component Fz, a transversal load component Fy, and a longitudinal load component Fx of a load F, and
FIG. 16 is a simplified cross-sectional view of a sensor assembly configured to detect a vertical load component Fz, a transversal load component Fy, and a longitudinal load component Fx of a load F.
FIG. 17 is a simplified perspective view of a tow coupling comprising a sensor assembly for force sensing.

### DETAILED DESCRIPTION OF EXAMPLE EMBODIMENTS

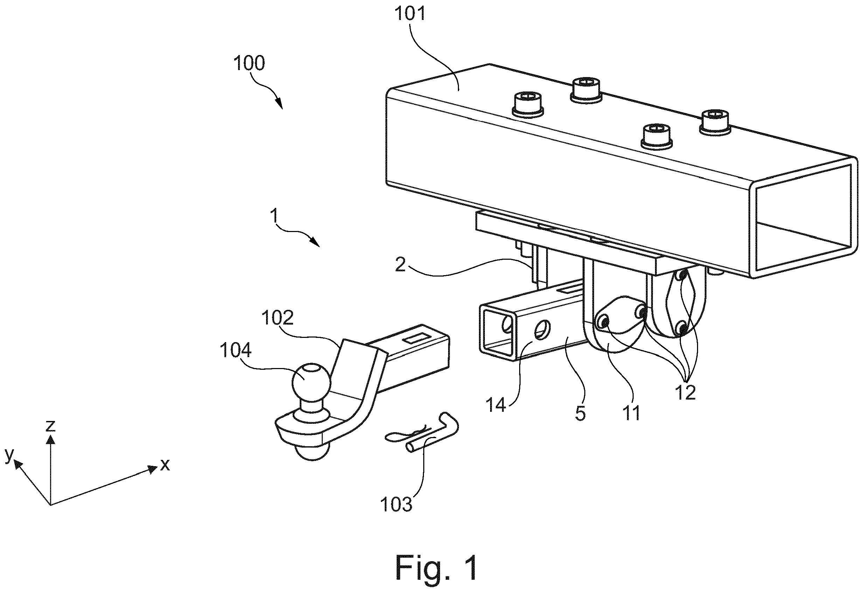

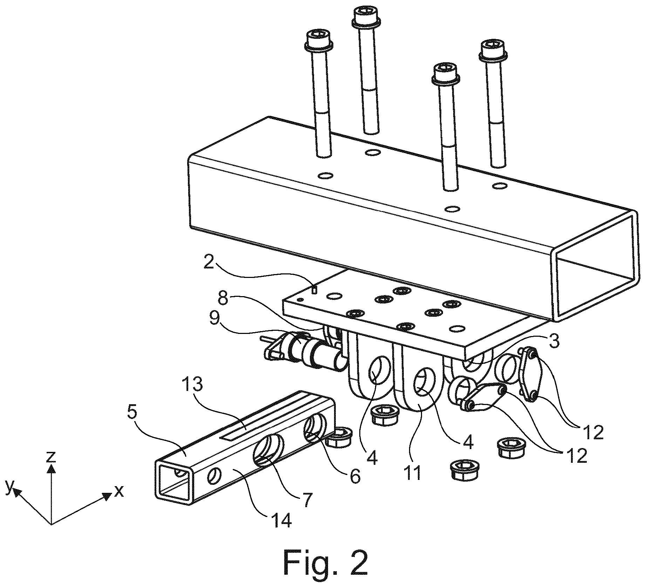

FIG. 1 is a simplified perspective view of a tow coupling comprising a sensor assembly 1 for force sensing according to aspects of the invention; FIG. 2 is a simplified exploded view of the tow coupling.

The sensor assembly 1 for force sensing comprises a first portion 2 (supporting yoke) having a first through hole 3 and a second through hole 4, a second portion 5 (receiving tube) having a third through hole 6 and fourth through hole 7. The third and fourth through holes 6, 7 are positioned in correspondence to the first and second through holes 3, 4.

The second portion defines a Cartesian coordinate system having a longitudinal direction X, a transversal direction Y and a vertical direction Z. The longitudinal direction X extends in the direction of longitudinal extension of the second portion. The transversal direction Y extends in a direction perpendicular to the longitudinal direction X and in a horizontal plane. The vertical direction Z extends in a direction that perpendicular to the longitudinal direction X and the transversal direction Y.

The sensor assembly 1 further comprises a first pin 8 and a second pin 9.The first pin 8 is arranged such that it extends through the first and third through holes 3, 6. The second pin 9 is arranged such that it extends through the second and fourth through holes 4, 7. The first portion 2 is coupled to the second portion 5 via the first and second pins 8, 9.

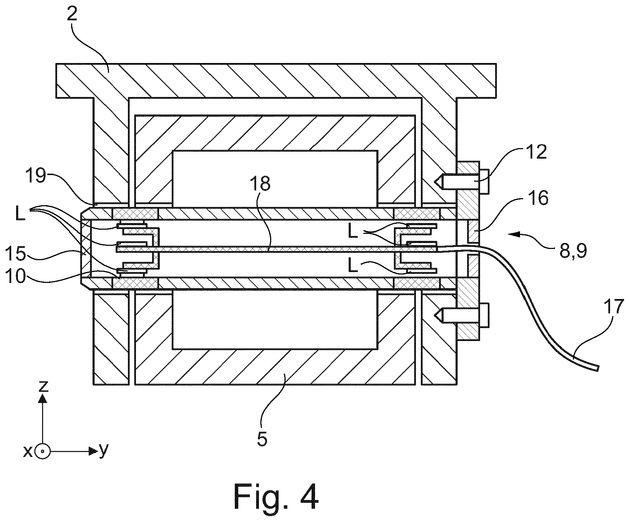

At least one out of the first and the second pin 8, 9 comprises at least one magneto-elastically active region 10 (see FIG. 4) that is directly or indirectly attached to or forms a part of the pin 8, 9 in such a manner that mechanic stress of the pin 8, 9 is transmitted to the magneto-elastically active region.

The magneto-elastically active region 10 comprises at least one magnetically polarized region such that a polarization of the polarized region becomes increasingly helically shaped as the applied stress increases.

The at least one pin 8, 9 further comprises a magnetic field sensor means arranged approximate the at least one magneto-elastically active region 10 for outputting a signal corresponding to a stress-induced magnetic flux emanating from the magnetically polarized region.

The magnetic field sensor means comprises at least one direction sensitive magnetic field sensor L. The at least one direction sensitive magnetic field sensor is configured for determination of a shear force in at least one direction.

The at least one direction sensitive magnetic field sensor L is in particular arranged to have a predetermined and fixed spatial coordination with the respective pin 8, 9.

The pin 8, 9 comprises the at least one direction sensitive magnetic field sensor L is at least partially hollow. The at least one direction sensitive magnetic field sensor L is arranged inside the interior of the pin 8, 9.

The first through hole 3 and the third through hole 6 are configured such that they encompass the first pin 8 in a positive-fitting manner. In other words, the first pin 8 extends through the first and third through holes 3, 6, and the first pin 8 is supported in at least two rotational degrees of freedom and at least two translational degrees of freedom by abutting surfaces of the through holes.

The second pin 9 is encompassed by the second through hole 4 in a positive-fitted manner. In other words, the second pin 9 extends through the second through hole 4, and the second pin 9 is supported in at least two rotational degrees of freedom and at least two translational degrees of freedom by abutting surfaces of the second through hole 4.

The fourth through hole 7 is configured such that the second pin 9 has one additional degree of freedom of movement (compared to the first pin 8 in the third through hole 6) within the fourth through hole 7. Differently stated, the second pin 9 extends through fourth through hole 7, and the second pin 9 is supported in at least two rotational degrees of freedom and at least one translational degree of freedom by abutting surfaces of the through holes. The number of translational degrees of freedom of the second pin 9 in the fourth through hole 7 is one more than the number of translational degrees of freedom of the first pin 8 the third through hole 6.

The additional degree of freedom is a translational degree of freedom that extends in the longitudinal direction X.

The first portion 2 has a yoke-like shape, wherein yoke legs 11 of the first portion comprise the first through hole 3 and second through hole 4.

The second portion 5 has a tubular shape, wherein side walls and/or a center wall of the second portion 5 comprise the third through hole 6 and the fourth through hole 7.

The direction sensitive magnetic field sensor is (or the direction sensitive magnetic field sensors are) configured to detect force components of shear forces introduced into the pins 8, 9 by the first portion 2 and the second portion 5.

The first and/or second pin 8, 9 is fixedly attached (in all six degrees of freedom in a predetermined manner to the first portion 2. Bolts 12 screw the pins 8, 9 (via attachment flanges of the pins) to yoke legs 11 of the first portion 2.

The second portion 5 comprises a center wall 13 extending in the longitudinal direction X and the vertical direction Z, the third through hole 6 and fourth through hole 7 extend through the center wall 13.

The first portion 2 has a yoke-like shape, wherein the yoke legs 11 of the first portion 2 comprise the first and second through holes 3, 4, and wherein the center wall comprises the third and fourth through holes 6, 7.

Direction sensitive magnetic field sensor(s) L is/are configured to detect force components of shear forces introduced into the pins 8, 9 by the first portion 2 and the second portion 5.

Side walls 14 of the second portion 5 comprise through holes in side walls that are larger than the third and fourth through holes 6, 7, such that the shear forces are introduced into the pins 8, 9 by abutment surfaces of the first and second through holes 3, 4 in the yoke legs 11 and abutment surfaces of the third and fourth through holes 6, 7 in the center wall 13.

The tow coupling 100 comprises the sensor assembly 1. The first portion 2 is a hitch assembly that is attached to the chassis 101 of a car.

The second portion 5 is a receiving tube that is configured to receive a draw bar 102 (hitch bar, ball mount) of the tow coupling 100. The draw bar 102 can be partially inserted into the second portion 5. A pin 103 secures the draw bar 102 to the second portion 5.

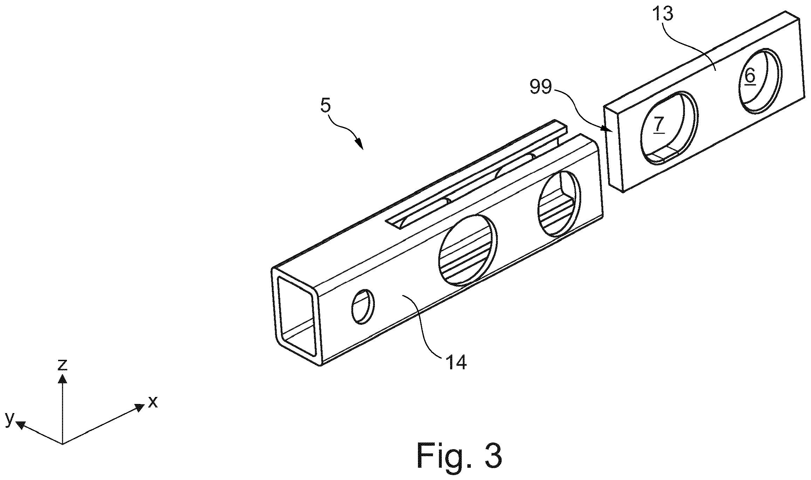

FIG. 3 is a simplified exploded view of a second portion. The second portion 5 is of tubular (extruded) shape comprising a vertical center wall extending along the longitudinal direction X.

The center wall 13 comprises the third through hole 6 and the fourth through hole 7.

The center wall 13 can be welded into a corresponding slit in the second portion 5. The center wall 14 thereby forms a part of the second portion 5.

The second portion 5 further comprises a draw bar barrier 99. The draw bar barrier can be formed by an abutment surface of the center wall 13. Alternatively, the draw bar barrier can be formed by an abutment edge or a bolt/pin extending (in a substantially radial direction) into the inside of the tubular second portion. The draw bar barrier 99 hinders a draw bar from contacting the first and second pins 8, 9.

FIG. 4 is a simplified cross-sectional view of a sensor assembly. The first and second pins 8, 9 extend through the first through hole 3 and the second through hole 4 in the first portion 2 and through the third through hole 6 and the fourth through hole 7 in the second portion 5.

The first and/or second pin 8, 9 is an at least partially hollow pin. The hollow pin can be sealed by a front cover 15 and a rear cover 17. The rear cover 17 can provide a cable bushing to provide access for supply and/or signal lines 17.

The pins 8, 9 comprise a plurality of direction sensitive field sensors L. A printed circuit board 18 supports the direction sensitive field sensors L.

The pins 8, 9 can comprise one or more collars 19 of comparatively low magnetic permeability (compared to the hollow shaft of the pins 8, 9) arranged such that the positions of the one or more collars 19 substantially correspond to one or more of the positions of the through holes 3, 4, 6, 7 in the first and/or second portion.

Alternatively, one or more of the through holes 3, 4, 6, 7 can comprise a collar/bushing 19 of comparatively low magnetic permeability (compared to the hollow shaft of the pins 8, 9).

The first portion 2 and the second portion 5 can be configured to provide a gap between the first portion 2 and the second portion 5. The gap can comprise a material of low magnetic permeability (compared to the hollow shaft of the pins 8, 9).

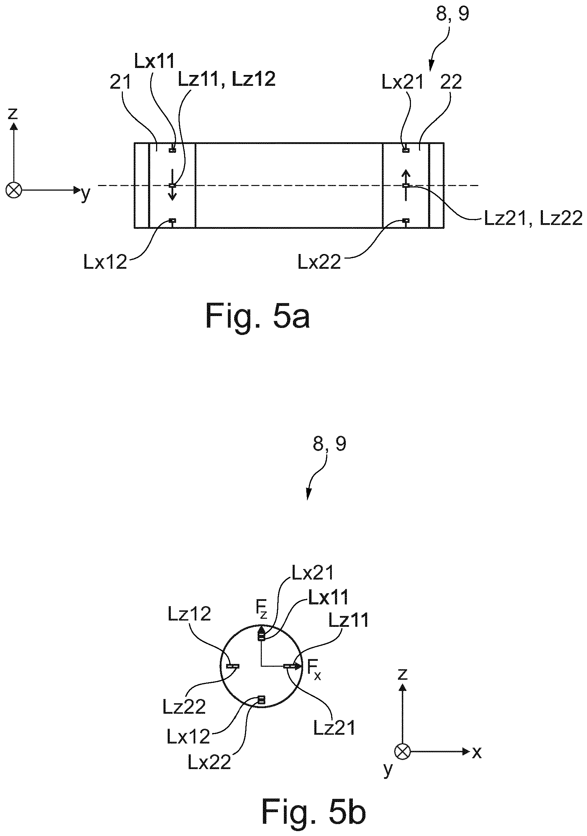

FIGs. 5a, 5b are simplified cross-sectional simplified views of a first and/or second pin 8, 9.

The first and/or second pin 8, 9 comprises a first magneto-elastically active region 21 and a second magneto-elastically active region 22.

The first magneto-elastically active region 21 is directly or indirectly attached to or form parts of the pin 8, 9, in such a manner that mechanic (shear) stress applied to the pin 8, 9 is at least partially transmitted to the first magneto-elastically active region 21.

The second magneto-elastically active region 22 is directly or indirectly attached to or form parts of the pin 8, 9, in such a manner that mechanic (shear) stress applied to the pin 8, 9 is at least partially transmitted to the second magneto-elastically active region 22.

Each magneto-elastically active region comprises a magnetically polarized region.

The magnetic polarization of the first magneto-elastically active region 21 and the magnetic polarization of the second magneto-elastically active region 22 can be substantially opposite to each other.

The magnetic field sensor means comprises at least one first direction sensitive magnetic field sensor Lx1, Lz1 being arranged approximate the first magneto-elastically active region 21 for outputting a first signal corresponding to a stress-induced magnetic flux emanating from the first magnetically polarized region 21.

The magnetic sensor means comprises at least one second direction sensitive magnetic field sensor Lx2, Lz2 being arranged approximate the second magneto-elastically active region 22 for outputting a second signal corresponding to a stress-induced magnetic flux emanating from the second magnetically polarized region 22.

The at least one out of the first and the second pin 8, 9 comprises at least one X-direction sensitive magnetic field sensor Lx configured to detect a force component Fx1 in a longitudinal direction X that is defined by a direction of longitudinal extension of the second portion 5.

The at least one out of the first and the second pin 8, 9 comprises at least one Z-direction sensitive magnetic field sensor Lz configured to detect a force component Fz1 in a vertical direction Z, that is substantially perpendicular to the longitudinal direction X and perpendicular to the transversal direction Y of longitudinal extension of the at least one out of the first and second pin 8, 9.

Advantageously, the first and/or the second pin 8, 9 comprises a first magneto-elastically active region 21 and a second magneto-elastically active region 22, which are directly or indirectly attached to or form parts of the respective pin 8, 9 in such a manner that mechanic stress that is applied to the pin 8, 9 is transmitted to the magneto-elastically active regions.

Each magneto-elastically active region 21, 22 comprises a magnetically polarized region.

The magnetic polarization of the first magneto-elastically active region 21 and the magnetic polarization of the second magneto-elastically active region 22 can be substantially opposite to each other.

The magnetic field sensor means comprises at least one first direction sensitive magnetic field sensor L1 being arranged approximate the first magneto-elastically active region for outputting a first signal corresponding to a stress-induced magnetic flux emanating from the first magnetically polarized region 21.

The magnetic sensor means comprises at least one second direction sensitive magnetic field sensor L2 being arranged approximate the second magneto-elastically active region 22 for outputting a second signal corresponding to a stress-induced magnetic flux emanating from the second magnetically polarized region 22.

The first and/or the second pin 8, 9 comprises at least one respective first X-direction sensitive magnetic field sensor Lx11, Lx12 configured to detect a force component Fx1 in the first magneto-elastically active region 21 in the longitudinal direction X.

The first and/or the second pin 8, 9 comprises at least one respective second X-direction sensitive magnetic field sensor Lx21, Lx22 configured to detect a force component Fx2 in the second magneto-elastically active region 22 in the longitudinal direction X.

The first and/or the second pin 8, 9 comprises at least one respective first Z-direction sensitive magnetic field sensor Lz11, Lz12 configured to detect a force component Fz1 in the first magneto-elastically active region 21 in the vertical direction Z.

The first and/or the second pin 8, 9 comprises at least one second Z-direction sensitive magnetic field sensor Lz21, Lz22 configured to detect a force component Fz2 in the second magneto-elastically active region in the vertical direction Z.

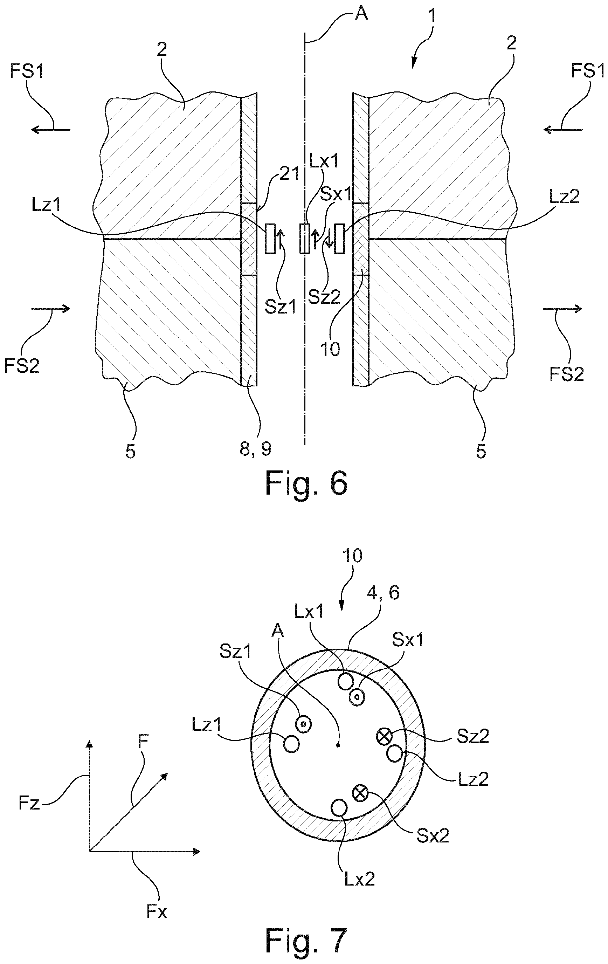

The sensor means comprises at least four magnetic field sensors L having a first to fourth sensing direction, wherein the sensing directions S and a shaft axis A (compare FIGs. 6 and 7) are at least substantially parallel to each other. The first to fourth magnetic field sensors are arranged along the circumference of the pin having substantially equal distances in circumferential direction between each other.

The at least one magneto-elastically active region projects along a circumference of the respective pin, and wherein said region is magnetized in that the domain magnetizations in the magnetically polarized region are in a circumferential direction of the member.

FIG. 6 is a simplified cross section of a sensor assembly 1 according to an embodiment of the invention. The sensor assembly 1 comprises a first portion 2, which is coupled to a second portion 5 via the pin 8, 9. The first portion 2 is subject to a first shear force FS1 pointing to the left. The second portion 5 is exposed to a second and opposite shear force FS2, pointing to the right. The pin 8, 9 comprises a magneto-elastically active region 21, which is arranged at the transition between the first and the second portion 2, 5. Consequently, the active region 21 is subject to shear forces causing the magnetic flux emanating from the magnetically polarized region of said active region 21 to become increasingly helically shaped, when the shear forces FS1, FS2 increase. The sensor means of the pin 8, 9 comprises four direction sensitive magnetic field sensors Lx1, Lx2, Lz1, Lz2 being arranged along the inner circumference of the pin 8, 9.

The configuration of the direction sensitive magnetic field sensors Lx1, Lx2, Lz1, Lz2 is explained in more detail by making reference to the simplified cross section of the sensor assembly 1, which is shown in FIG. 7. The cross sectional plane is arranged to be substantially perpendicular to the shaft axis A. The first direction sensitive sensor Lx1 and the third direction sensitive sensor Lx2 form a first group of magnetic field sensors. The second group of sensors consists of the second direction sensitive sensor Lz1 and the fourth direction sensitive sensor Lz2. The sensing direction Sx1 of the first sensor Lx1 is 180° opposite to the third sensing direction Sx2 of the third sensor Lx2. This is indicated in the figure using the conventional signs. The first sensing direction Sx1 points out of the paper plane, the third sensing direction Sx2 points into the paper plane. Similar to the first group of sensors Lx1, Lx2, the second sensing direction Sz1 and the fourth sensing direction Sz2 are 180° opposite to each other. The second and fourth sensor Lz1, Lz2 are arranged accordingly. As it is indicated using the commonly known direction signs, the second sensing direction Sz1 points out of the paper plane while the fourth sensing direction Sz2 is directed into the paper plane.

The second sensor Lz1 (having the second sensing direction Sz1) and the fourth sensor Lz2 (having the fourth sensing direction Sz2) are shown in the simplified cross section of FIG. 7. The first sensor Lx1 and the first sensing direction Sx1 are added to the simplified cross section of FIG. 7 solely for clarification of the configuration of the sensors. Naturally, the first sensor Lx1 is not arranged in a common plane with the second and fourth sensor Sz1, Sz2, as it is shown in the cross section of FIG. 7.

When the pin 8, 9 is exposed to the first and second shear stress forces FS1, FS2, the signals of the first group of sensors (comprising the first and the third sensor Lx1, Lx2) is analyzed so as to determine a first component of a force F inducing the respective shear stress forces FS1, FS2. In a Cartesian coordinate system, this first component may be indentified with the X-component Fx of the applied force F. The evaluation of the measurement values of the sensors of the second group (i. e. the second sensor Lz1 and the fourth sensor Lz2) results in a value for a second component of the force F. Within the same Cartesian coordinate system, this second force is identified with the Z-component of the force F, i. e. the force component Fz.

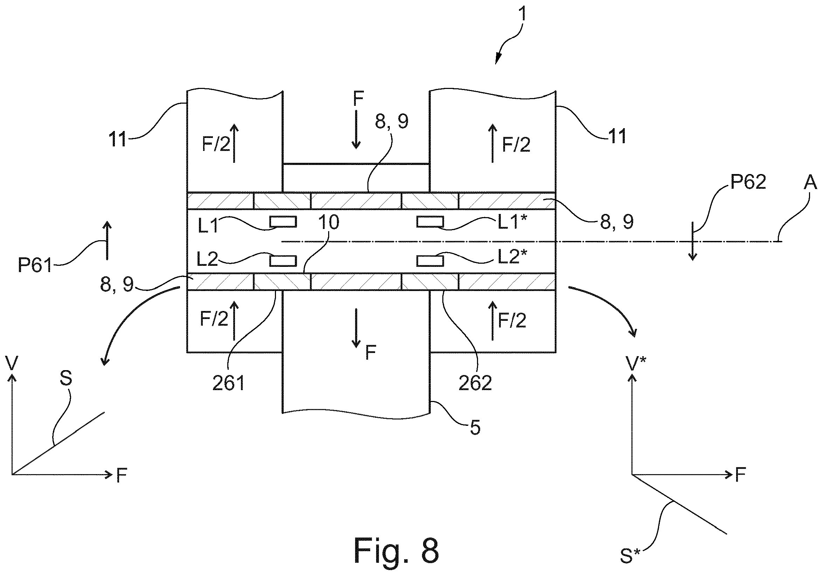

FIG. 8 is a cross section of a magneto-elastic sensor assembly 2 according to another embodiment of the invention. The first portion 2 surrounds the second portion 5, which is exposed to a force F. The pin 8, 9 intersects the first and the second portions 2, 5 along the shaft axis A. The pin 8, 9 comprises a first magneto-elastically active region 261 and a second magneto-elastically active region 262. Similar to the other embodiments of the invention, these are directly or indirectly attached to or form a part of the pin 8, 9 in such a manner that the mechanic stress is transmitted to the active regions 261, 262. The active regions 261, 262 are magnetically polarized in opposite direction. This is illustrated by the first polarization P61 of the first active region 261 and the second polarization P62 of the second active region 262. The magnetic polarizations P61, P62 are substantially 180° opposite to each other. Furthermore, they are substantially perpendicular to the shaft axis A.

A first pair of magnetic field sensors comprising a first sensor L1 and a second sensor L2 is arranged inside the pin 8, 9 in that this pair of sensors cooperates with the first active region 261. Similar, a second pair of magnetic field sensors comprising a first and a second sensor L1* and L2* is arranged inside the pin 8, 9 so as to interact with the second active region 262. The sensors L1, L2 of the first pair and the sensors L1*, L2* of the second pair are arranged approximate the first and the second magneto-elastically active region 261, 262, respectively. The first sensor pair L1, L2 outputs a first signal S, which is illustrated as a voltage V varying with the applied force F in the lower left of FIG. 8. The signal S corresponds to a stress-induced magnetic flux emanating from the first magnetically polarized region 261.

Similarly, the second pair of magnetic sensors L1*, L2* outputs a second signal S* corresponding to a stress-induced magnetic flux emanating from the second magnetically polarized region 262. This signal S* is also a voltage V* varying with the applied F (see lower right of FIG. 8). However, the slope of the second signal S* is opposite to that of the first signal S. A control unit (not shown) of the magneto-elastic sensor assembly is configured for determination of the force F inducing a stress in the pin(s) 8, 9. The control unit performs a differential evaluation of the signals S and S* of the first pair of sensors L1, L2 and the second pair of sensors L1*, L2*. This differential evaluation advantageously doubles the sensitivity of the signal, which is correlated with the applied stress. Because the polarization P61 and P62 of the first and second magnetically active region 261, 262 is opposite to each other, theoretically possible external fields are compensated. The magneto-elastic sensor assembly according to this embodiment is more sensitive and less susceptible to errors.

Advantageously, all embodiments of the invention may be equipped with the sensor configuration of FIG. 8 having separate, oppositely polarized active regions 261, 262 and two corresponding sets i.e. pairs of sensors L1, L2 and L1*, L2*.

Furthermore, the embodiment of FIG. 8 may be equipped with the sensor configuration, which is known from the load pin in FIGs. 6 or 7. In other words, the sensor pairs L1, L2 and L1*, L2* may be replaced by a sensor configuration having four sensor pairs Lx11/Lx12, Lx21/Lx22, Lz11/Lz12, Lz21/Lz22, which is exemplarily shown in FIG. 5. According to this particular embodiment of the invention, additional force vectors may be determined.

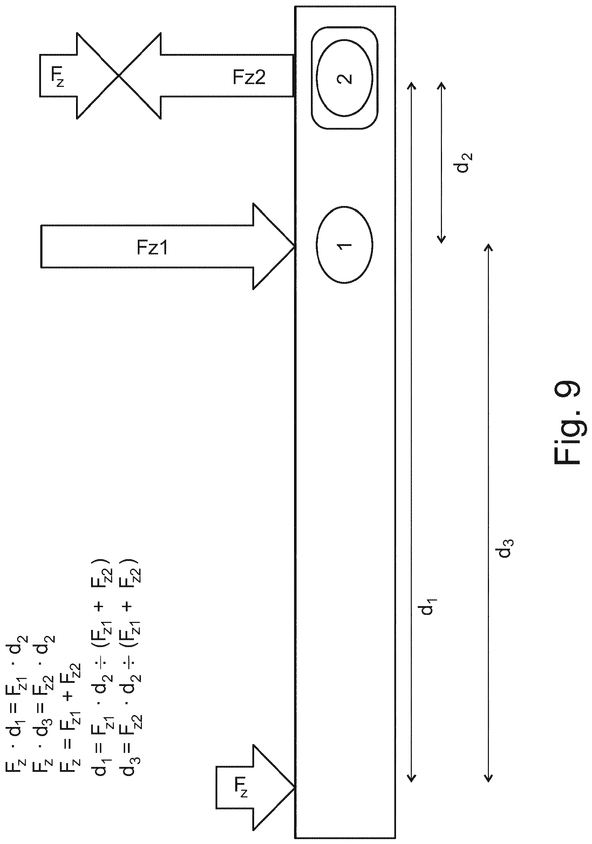

FIG. 9 is a simplified side view of a sensor assembly 1 detecting a simplified first load case. The force F has a vertical force component Fz in the vertical direction Z. The force F is applied to the sensor assembly via the second portion 5, and more precisely via the ball coupling 104 of the draw bar 102.

For determining the force component Fz the following set of equations have to be solved. $Fz * d 1 = Fz 1 * d 2$ (1) $Fz * d 3 = Fz 2 * d 2$ (2) $Fz = Fz 1 + Fz 2$ (3) $d 1 = Fz 1 * d 2 / \left(Fz1+Fz2\right)$ (4) $d 3 = Fz 2 * d 2 / \left(Fz1+Fz2\right)$ (5)

F1 is a reaction force on the first pin 8, F2 is a reaction force on the second pin 9. D2 is the distance between (the axes of) the first and the second pin 8, 9. D1 is the distance between the point of load (the ball coupling) and (the axis of) the second pin. D3 is the distance between the point of load and (the axis of) the first pin.

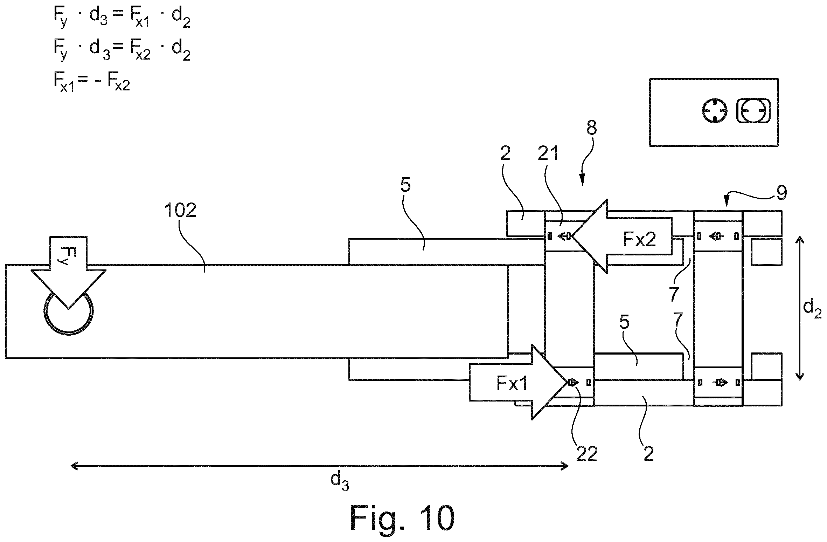

FIG. 10 is a simplified top view of a sensor assembly detecting a simplified second load case. The force has a transversal force component Fy in the transversal direction Y applied to the sensor assembly 1 via the second portion 5, and more precisely via the ball coupling 104 of the draw bar 102.

The fourth through hole 7 provides a degree of freedom in the longitudinal direction X.

The transversal force component Fy creates a first reactive force Fx2 acting in the longitudinal direction X on the first magneto-elastically active region 21 of the first pin 8, and a second reactive force Fx1 acting in the longitudinal direction X on the second magneto-elastically active region 22 of the first pin 8.

For determining the force component Fy the following set of equations have to be solved. $Fy * d 3 = Fx 1 * d 2$ (6) $Fy * d 3 = Fx 2 * d 2$ (7) $Fx 1 = - Fx 2$ (8)

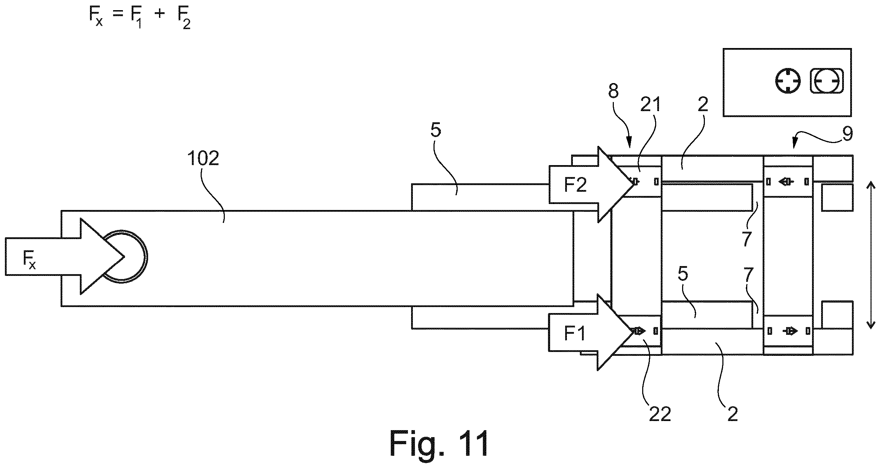

FIG. 11 is a simplified top view of a sensor assembly detecting a simplified third load case. The force has a longitudinal force component Fx in the longitudinal direction X applied to the to the sensor assembly 1 via the second portion 5, and more precisely via the ball coupling 104 of the draw bar 102.

The fourth through hole 7 provides a degree of freedom in the longitudinal direction X.

The longitudinal force component Fx creates a first reactive force Fx2 acting in the longitudinal direction X on the first magneto-elastically active region 21 of the first pin 8, and a second reactive force Fx1 acting in the longitudinal direction X on the second magneto-elastically active region 22 of the first pin 8.

For determining the force component Fx the following equation has to be solved. $Fx = Fx 1 + Fx 2$ (9)

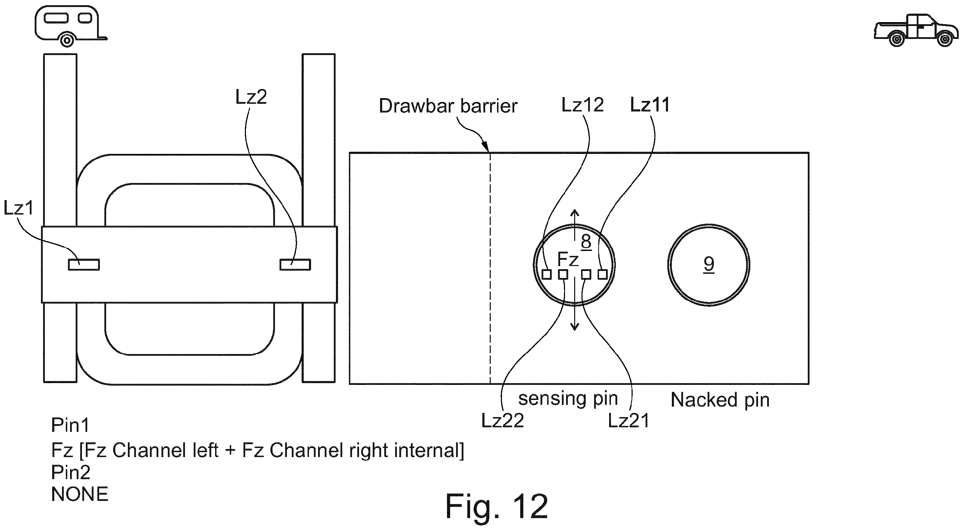

FIG. 12 is a simplified cross-sectional view of a sensor assembly configured to detect a vertical load component Fz of a load F.

The first pin 8 comprises a first magneto-elastically active region 21 and a second magneto-elastically active region 22, which are directly or indirectly attached to or form parts of the first pin 8 in such a manner that mechanic stress that is applied to the first pin 8 is transmitted to the magneto-elastically active regions 21, 22.

Each magneto-elastically active region 21, 22 comprises a magnetically polarized region.

The magnetic polarization of the first magneto-elastically active region 21 and the magnetic polarization of the second magneto-elastically active region 22 can be substantially opposite to each other.

The magnetic field sensor means comprises at least one first direction sensitive magnetic field sensor Lz11 being arranged approximate the first magneto-elastically active region for outputting a first signal corresponding to a stress-induced magnetic flux emanating from the first magnetically polarized region 21.

The magnetic sensor means further comprises at least one second direction sensitive magnetic field sensor Lz21 being arranged approximate the second magneto-elastically active region 22 for outputting a second signal corresponding to a stress-induced magnetic flux emanating from the second magnetically polarized region 22.

The first pin 8 comprises a first and a third Z-direction sensitive magnetic field sensor Lz11, Lz12 configured to detect a force component Fz1 in the first magneto-elastically active region 21 in the vertical direction Z.

The first pin 8 further comprises a second and a fourth Z-direction sensitive magnetic field sensor Lz21, Lz22 configured to detect a force component Fz2 in the second magneto-elastically active region in the vertical direction Z.

The second pin 9 is a naked pin, i.e. the second pin comprises no magneto-elastically active region and no direction sensitive magnetic field sensors.

Differently stated, the first pin 8 comprises at least one first Z-direction sensitive magnetic field sensor Lz11 and at least one second Z-direction sensitive magnetic field sensor Lz21.

The first and second pins 8, 9 are rigidly fixed within the first and second through holes 3, 4 of the first portion 2.

The third and the fourth through holes 6, 7 can provide a minimal gap between the abutment surfaces of the second portion 5 and the first and second pins 8, 9.

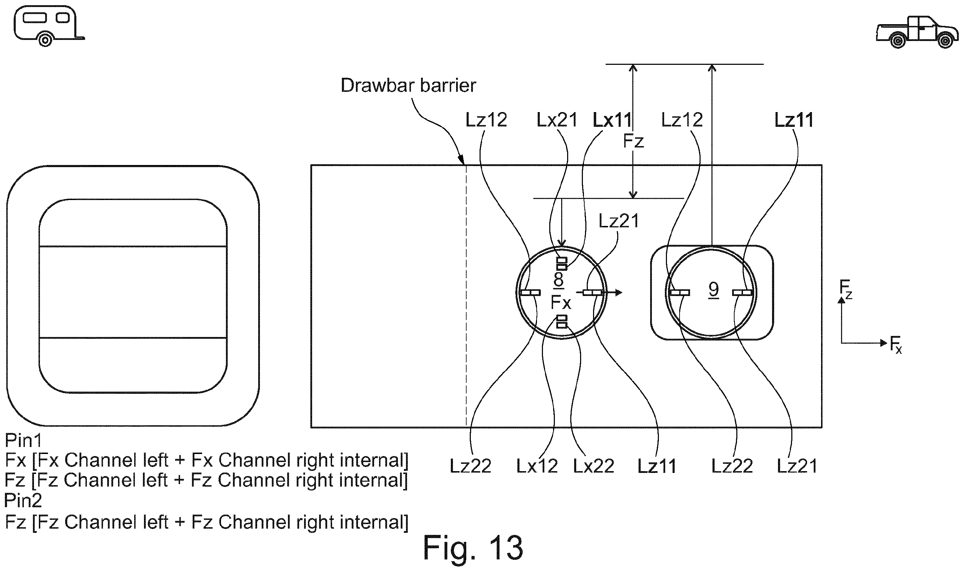

FIG. 13 is a simplified cross-sectional view of a sensor assembly configured to detect a vertical load component Fz, a transversal load component Fy, and a longitudinal load component Fx of a load F.

The first pin 8 comprises a first magneto-elastically active region 21 and a second magneto-elastically active region 22, which are directly or indirectly attached to or form parts of the first pin 8 in such a manner that mechanic stress that is applied to the first pin 8 is transmitted to the magneto-elastically active regions 21, 22.

Each magneto-elastically active region 21, 22 comprises a magnetically polarized region.

The magnetic polarization of the first magneto-elastically active region 21 and the magnetic polarization of the second magneto-elastically active region 22 can be substantially opposite to each other.

The magnetic field sensor means comprises at least one first and third direction sensitive magnetic field sensor Lx11, Lz11 being arranged approximate the first magneto-elastically active region for outputting a first signal and a third signal corresponding to a stress-induced magnetic flux emanating from the first magnetically polarized region 21.

The magnetic sensor means further comprises at least one second and fourth direction sensitive magnetic field sensor Lx21, Lz21 being arranged approximate the second magneto-elastically active region 22 for outputting a second signal and a fourth signal corresponding to a stress-induced magnetic flux emanating from the second magnetically polarized region 22.

The first pin 8 comprises a first and a third Z-direction sensitive magnetic field sensor Lz11, Lz12 configured to detect a vertical force component Fz11 in the first magneto-elastically active region 21 in the vertical direction Z.

The first pin 8 further comprises a second and a fourth Z-direction sensitive magnetic field sensor Lz21, Lz22 configured to detect a vertical force component Fz12 in the second magneto-elastically active region in the vertical direction Z.

The first pin 8 comprises a first and a third X-direction sensitive magnetic field sensor Lx11, L12 configured to detect a longitudinal force component Fx2 in the first magneto-elastically active region 21 in the longitudinal direction X.

The first pin 8 further comprises a second and a fourth X-direction sensitive magnetic field sensor Lx21, Lx22 configured to detect a longitudinal force component Fx1 in the second magneto-elastically active region in the longitudinal direction X.

The second pin 9 comprises a first and a third Z-direction sensitive magnetic field sensor Lz11, Lz12 configured to detect a vertical force component Fz21 in the first magneto-elastically active region 21 in the vertical direction Z.

The second pin 9 further comprises a second and a fourth Z-direction sensitive magnetic field sensor Lz21, Lz22 configured to detect a vertical force component Fz22 in the second magneto-elastically active region in the vertical direction Z.

Differently stated, the first pin 8 comprises at least one first X-direction sensitive magnetic field sensor Lx11, at least one second X-direction sensitive magnetic field sensor Lx21, at least one first Z-direction sensitive magnetic field sensor Lz11, and the at least one second Z-direction sensitive magnetic field sensor Lz21. The second pin 9 comprises at least one first Z-direction sensitive magnetic field sensor Lz11 and at least one second Z-direction sensitive magnetic field sensor Lz21.

The first and second pins 8, 9 are rigidly fixed within the first and second through holes 3, 4 of the first portion 2.

The third and the fourth through holes 6, 7 can provide a minimal gap between the abutment surfaces of the second portion 5 and the first and second pins 8, 9.

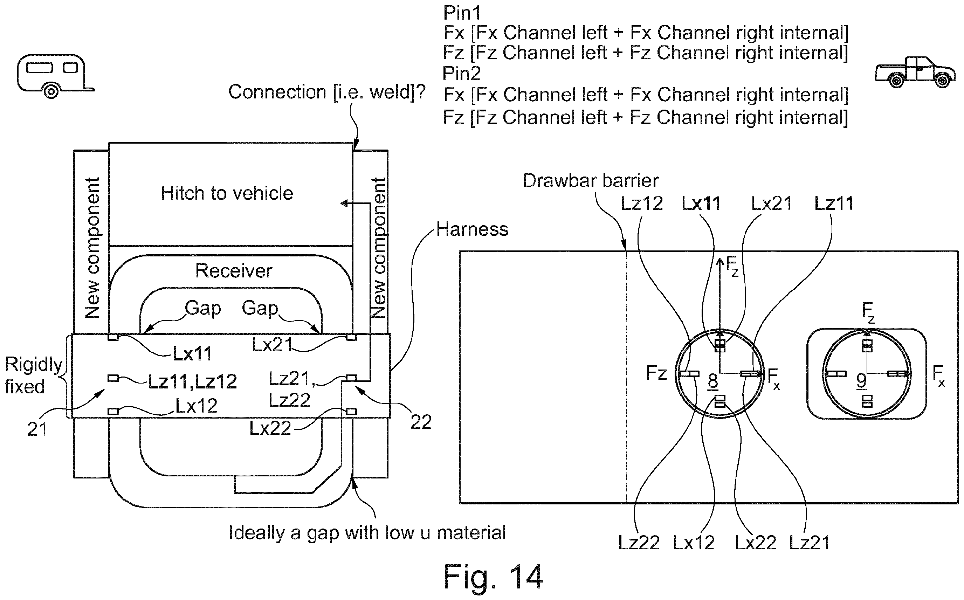

FIG. 14 is a simplified cross-sectional view of a sensor assembly configured to detect a vertical load component Fz, a transversal load component Fy, and a longitudinal load component Fx of a load F.

The first pin 8 comprises a first magneto-elastically active region 21 and a second magneto-elastically active region 22, which are directly or indirectly attached to or form parts of the first pin 8 in such a manner that mechanic stress that is applied to the first pin 8 is transmitted to the magneto-elastically active regions 21, 22.

Each magneto-elastically active region 21, 22 comprises a magnetically polarized region.

The magnetic polarization of the first magneto-elastically active region 21 and the magnetic polarization of the second magneto-elastically active region 22 can be substantially opposite to each other.

The magnetic field sensor means comprises at least one first and third direction sensitive magnetic field sensor Lx11, Lz11 being arranged approximate the first magneto-elastically active region for outputting a first signal and a third signal corresponding to a stress-induced magnetic flux emanating from the first magnetically polarized region 21.

The magnetic sensor means further comprises at least one second and fourth direction sensitive magnetic field sensor Lx21, Lz21 being arranged approximate the second magneto-elastically active region 22 for outputting a second signal and a fourth signal corresponding to a stress-induced magnetic flux emanating from the second magnetically polarized region 22.

The first pin 8 comprises a first and a third Z-direction sensitive magnetic field sensor Lz11, Lz12 configured to detect a vertical force component Fz11 in the first magneto-elastically active region 21 in the vertical direction Z.

The first pin 8 further comprises a second and a fourth Z-direction sensitive magnetic field sensor Lz21, Lz22 configured to detect a vertical force component Fz12 in the second magneto-elastically active region in the vertical direction Z.

The first pin 8 comprises a first and a third X-direction sensitive magnetic field sensor Lx11, L12 configured to detect a longitudinal force component Fx2 in the first magneto-elastically active region 21 in the longitudinal direction X.

The first pin 8 further comprises a second and a fourth X-direction sensitive magnetic field sensor Lx21, Lx22 configured to detect a longitudinal force component Fx1 in the second magneto-elastically active region in the longitudinal direction X.

The second pin 9 comprises a first and a third Z-direction sensitive magnetic field sensor Lz11, Lz12 configured to detect a vertical force component Fz21 in the first magneto-elastically active region 21 in the vertical direction Z.

The second pin 9 further comprises a second and a fourth Z-direction sensitive magnetic field sensor Lz21, Lz22 configured to detect a vertical force component Fz22 in the second magneto-elastically active region 22 in the vertical direction Z.

The second pin 9 comprises a first and a third X-direction sensitive magnetic field sensor Lx11, L12 configured to detect a longitudinal force component Fx10 in the first magneto-elastically active region 21 in the longitudinal direction X.

The second pin 9 further comprises a second and a fourth X-direction sensitive magnetic field sensor Lx21, Lx22 configured to detect a longitudinal force component Fx20 in the second magneto-elastically active region 22 in the longitudinal direction X.

Therefore, the configuration of the second pin 9 is substantially similar to the configuration of the first pin 8.

Differently stated, the first pin 8 comprises at least one first X-direction sensitive magnetic field sensor Lx11, at least one the second X-direction sensitive magnetic field sensor Lx21, at least one first Z-direction magnetic field sensor Lz11, and at least one second Z-direction magnetic field sensor Lz21. The second pin comprises at least one first X-direction sensitive magnetic field sensor Lx11, at least one second X-direction sensitive magnetic field sensor Lx21, at least one first Z-direction magnetic field sensor Lz11, and at least one second Z-direction magnetic field sensor Lz21.

However, the first and the second longitudinal force components Fx10, Fx20 are comparatively small (for example, resulting from friction between the abutment surface of the fourth through hole 7 and the second pin 9) or substantially zero. This is a direct result of the additional translational degree of freedom in the longitudinal direction X, which degree of freedom is provided by the fourth through hole 7 in the second portion 5.

The first and second pins 8, 9 are rigidly fixed within the first and second through holes 3, 4 of the first portion 2.

The third and the fourth through holes 6, 7 can provide a minimal gap between the abutment surfaces of the second portion 5 and the first and second pins 8, 9.

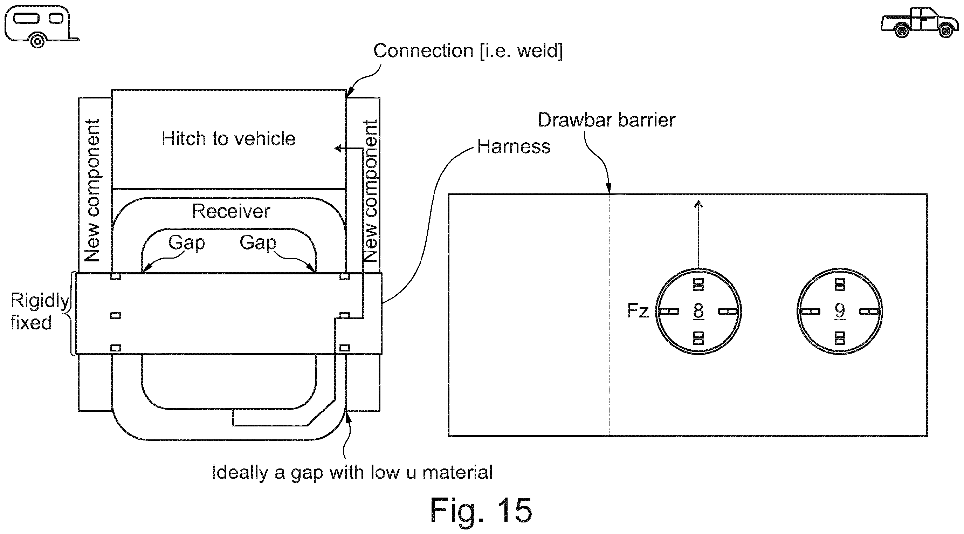

FIG. 15 is a simplified cross-sectional view of a sensor assembly configured to detect a vertical load component Fz, a transversal load component Fy, and a longitudinal load component Fx of a load F.

The first pin 8 comprises a first magneto-elastically active region 21 and a second magneto-elastically active region 22, which are directly or indirectly attached to or form parts of the first pin 8 in such a manner that mechanic stress that is applied to the first pin 8 is transmitted to the magneto-elastically active regions 21, 22.

Each magneto-elastically active region 21, 22 comprises a magnetically polarized region.

The magnetic polarization of the first magneto-elastically active region 21 and the magnetic polarization of the second magneto-elastically active region 22 can be substantially opposite to each other.

The magnetic field sensor means comprises at least one first and third direction sensitive magnetic field sensor Lx11, Lz11 being arranged approximate the first magneto-elastically active region for outputting a first signal and a third signal corresponding to a stress-induced magnetic flux emanating from the first magnetically polarized region 21.

The magnetic sensor means further comprises at least one second and fourth direction sensitive magnetic field sensor Lx21, Lz21 being arranged approximate the second magneto-elastically active region 22 for outputting a second signal and a fourth signal corresponding to a stress-induced magnetic flux emanating from the second magnetically polarized region 22.

The first pin 8 comprises a first and a third Z-direction sensitive magnetic field sensor Lz11, Lz12 configured to detect a vertical force component Fz11 in the first magneto-elastically active region 21 in the vertical direction Z.

The first pin 8 further comprises a second and a fourth Z-direction sensitive magnetic field sensor Lz21, Lz22 configured to detect a vertical force component Fz12 in the second magneto-elastically active region in the vertical direction Z.

The first pin 8 comprises a first and a third X-direction sensitive magnetic field sensor Lx11, L12 configured to detect a longitudinal force component Fx2 in the first magneto-elastically active region 21 in the longitudinal direction X.

The first pin 8 further comprises a second and a fourth X-direction sensitive magnetic field sensor Lx21, Lx22 configured to detect a longitudinal force component Fx1 in the second magneto-elastically active region in the longitudinal direction X.

The second pin 9 comprises a first and a third Z-direction sensitive magnetic field sensor Lz11, Lz12 configured to detect a vertical force component Fz21 in the first magneto-elastically active region 21 in the vertical direction Z.

The second pin 9 further comprises a second and a fourth Z-direction sensitive magnetic field sensor Lz21, Lz22 configured to detect a vertical force component Fz22 in the second magneto-elastically active region 22 in the vertical direction Z.

The second pin 9 comprises a first and a third X-direction sensitive magnetic field sensor Lx11, L12 configured to detect a longitudinal force component Fx22 in the first magneto-elastically active region 21 in the longitudinal direction X.

The second pin 9 further comprises a second and a fourth X-direction sensitive magnetic field sensor Lx21, Lx22 configured to detect a longitudinal force component Fx21 in the second magneto-elastically active region 22 in the longitudinal direction X.

Therefore the general configuration of the first pin 8 is substantially similar to the configuration of the first pin depicted in FIG. 14.

The general configuration of the second pin 9 is substantially similar to the configuration of the first pin 8.

The first and second pins 8, 9 are rigidly fixed within the first and second through holes 3, 4 of the first portion 2.

The third and the fourth through holes 6, 7 can provide a minimal gap between the abutment surfaces of the second portion 5 and the first and second pins 8, 9. Optionally, the fourth through hole 7 can provide no minimal gap, such that the second pin 9 is rigidly fixed within the third and the fourth through hole 7.

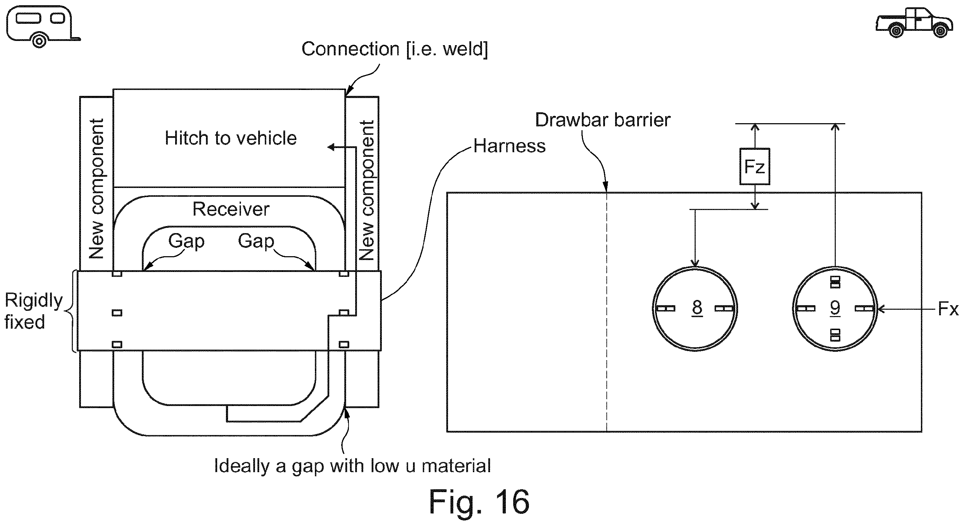

FIG. 16 is a simplified cross-sectional view of a sensor assembly configured to detect the first load case, the second load case, and the third load case.

The first pin 8 comprises a first magneto-elastically active region 21 and a second magneto-elastically active region 22, which are directly or indirectly attached to or form parts of the first pin 8 in such a manner that mechanic stress that is applied to the first pin 8 is transmitted to the magneto-elastically active regions 21, 22.

Each magneto-elastically active region 21, 22 comprises a magnetically polarized region.

The magnetic polarization of the first magneto-elastically active region 21 and the magnetic polarization of the second magneto-elastically active region 22 can be substantially opposite to each other.

The magnetic field sensor means comprises at least one first direction sensitive magnetic field sensor Lz11 being arranged approximate the first magneto-elastically active region for outputting a first signal corresponding to a stress-induced magnetic flux emanating from the first magnetically polarized region 21.

The magnetic sensor means further comprises at least one second direction sensitive magnetic field sensor Lz21 being arranged approximate the second magneto-elastically active region 22 for outputting a second signal and a fourth signal corresponding to a stress-induced magnetic flux emanating from the second magnetically polarized region 22.

The first pin 8 comprises a first and a third Z-direction sensitive magnetic field sensor Lz11, Lz12 configured to detect a vertical force component Fz11 in the first magneto-elastically active region 21 of the first pin 8 in the vertical direction Z.

The first pin 8 further comprises a second and a fourth Z-direction sensitive magnetic field sensor Lz21, Lz22 configured to detect a vertical force component Fz12 in the second magneto-elastically active region of the first pin 8 in the vertical direction Z.

The first pin 8 comprises no X-direction sensitive magnetic field sensors.

Therefore, the general configuration of the first pin 8 is substantially similar to the general configuration of the first pin 8 depicted in FIG. 12.

The second pin 9 comprises a first and a third Z-direction sensitive magnetic field sensor Lz11, Lz12 configured to detect a vertical force component Fz21 in the first magneto-elastically active region 21 in the vertical direction Z.

The second pin 9 further comprises a second and a fourth Z-direction sensitive magnetic field sensor Lz21, Lz22 configured to detect a vertical force component Fz22 in the second magneto-elastically active region 22 in the vertical direction Z.

The second pin 9 comprises a first and a third X-direction sensitive magnetic field sensor Lx11, L12 configured to detect a longitudinal force component Fx22 in the first magneto-elastically active region 21 in the longitudinal direction X.

The second pin 9 further comprises a second and a fourth X-direction sensitive magnetic field sensor Lx21, Lx22 configured to detect a longitudinal force component Fx21 in the second magneto-elastically active region 22 in the longitudinal direction X.

Therefore, the second pin 9 generally comprises a configuration that is substantially similar to the general configuration of the second pin 9 depicted in FIG. 15.

The first and second pins 8, 9 are rigidly fixed within the first and second through holes 3, 4 of the first portion 2.

The third and the fourth through hole 6, 7 can provide a minimal gap between the abutment surfaces of the second portion 5 and the first and second pins 8, 9. Optionally, the fourth through hole 7 can provide no minimal gap, such that the second pin 9 is rigidly fixed within the third and the fourth through hole 7.

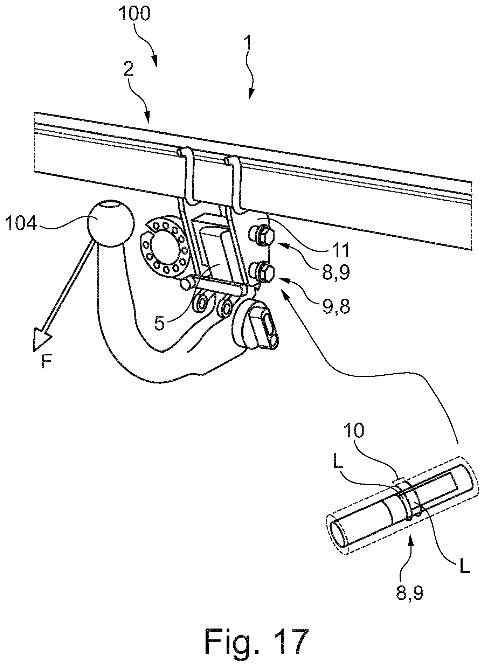

FIG. 17 is a simplified perspective view of a tow coupling comprising a sensor assembly for sensing (components) of a force F. The sensor assembly 1 for sensing a force F comprises a first portion 2 (attachment assembly, supporting yoke) having a first and a second through hole 3, 4.

The sensor assembly 1 further comprises a second portion 5 (trailer hitch, towing hook) having a third and fourth through hole 6, 7. The third and fourth through holes 6, 7 are positioned in correspondence to the first and second through holes 3, 4.

The sensor assembly 1 further comprises a first pin 8 and a second pin 9. The first pin 8 is arranged such that it extends through the first and third through holes 3, 6. The second pin 9 is arranged such that it extends through the second and fourth through holes 4, 7.

The first portion 2 is coupled to the second portion 5 via the first and second pins 8, 9.

At least one out of the first and the second pin 8, 9 comprises at least one magneto-elastically active region 10 that is directly or indirectly attached to or forms a part of the pin 8, 9 in such a manner that mechanic stress on the pin is transmitted to the magneto-elastically active region.

The magneto-elastically active region 10 comprises at least one magnetically polarized region such that a polarization of the polarized region becomes increasingly helically shaped as the applied stress increases.

The at least one pin 8, 9 further comprises a magnetic field sensor means arranged approximate the at least one magneto-elastically active region 10 for outputting a signal corresponding to a stress-induced magnetic flux emanating from the magnetically polarized region.

The magnetic field sensor means comprise at least one direction sensitive magnetic field sensor L, which is configured for determination of a shear force in at least one direction.

The at least one direction sensitive magnetic field sensor L is arranged to have a predetermined and fixed spatial coordination with the pin 8, 9.

The pin 8, 9 comprising the at least one direction sensitive magnetic field sensor L is at least partially hollow.

The at least one direction sensitive magnetic field sensor L is arranged inside the interior of the pin 8, 9.

The first and second pins 8, 9 are substantially arranged along the vertical direction Z. The pins 8, 9 extend in the transversal direction Y. The longitudinal direction is perpendicular to the vertical direction Z and the transversal direction Y to define the Cartesian coordinate system. The system of equations that has to be solved in order to determine the respective load components, has to be altered accordingly.

Further features and aspects of the invention (which have been described with respect to the preceding embodiments) may also apply to this embodiment.

The sensor assembly 1 is part of a tow coupling 100. The first part 2 is configured to be attached to the chassis of an automobile. The second part 5 provides a ball head 104 that is configured to couple to a trailer.

The direction sensitive sensors L may be vector sensors. In particular, Hall-effect, magneto-resistance, magneto-transistor, magneto-diode, MAGFET field sensor or fluxgate magneto-meter sensors can be applied. This advantageously applies to all embodiments of the invention.

The sensor assembly for force sensing according to aspects of the invention is advantageously applicable for load detection tow couplings, for load detection in farming equipment, and/or for load detection in construction equipment.

Although certain presently preferred embodiments of the disclosed invention have been specifically described herein, it will be apparent to those skilled in the art to which the invention pertains that variations and modifications of the various embodiments shown and described herein may be made without departing from the scope of the invention. Accordingly, it is intended that the invention be limited only to the extent required by the appended claims and the applicable rules of law.

## Claims

1. A sensor assembly (1) for force sensing comprising: a first portion (2) having a first (3) and a second through hole (4), a second portion (5) having a third (6) and fourth through hole (7), the third and fourth through holes (6, 7) being positioned in correspondence to the first and second through holes (3, 4), the sensor assembly (1) further comprising a first pin (8) and a second pin (9), wherein the first pin (8) is arranged such that it extends through the first and third through holes (3, 6) and the second pin (9) is arranged such that it extends through the second and fourth through holes (4, 7), so as to couple the first portion (2) to the second portion (5), wherein the first and the second pin (8, 9) comprises at least one magneto-elastically active region (10) that is directly or indirectly attached to or forms a part of the pin (8, 9) in such a manner that mechanical stress on the pin is transmitted to the magneto-elastically active region (10), the magneto-elastically active region comprising at least one magnetically polarized region such that a polarization of the polarized region becomes increasingly helically shaped as the applied stress increases; and a magnetic field sensor means arranged approximate the at least one magneto-elastically active region (10) for outputting a signal corresponding to a stress-induced magnetic flux emanating from the magnetically polarized region, the magnetic field sensor means comprising at least one direction sensitive magnetic field sensor (L), which is configured for determination of a shear force in at least one direction, wherein the at least one direction sensitive magnetic field sensor (L) is configured to detect force components of shear forces introduced into the pins (8, 9) by the first portion (2) and the second portion (5), wherein the at least one direction sensitive magnetic field sensor (L) is in particular arranged to have a predetermined and fixed spatial coordination with the pin (8, 9), and wherein the pin (8, 9) comprising the at least one direction sensitive magnetic field sensor (L) is at least partially hollow and the at least one direction sensitive magnetic field sensor (L) is arranged inside the interior of the pin (8, 9);
wherein at least one out of the first and the second pin (8, 9) comprises: at least one X-direction sensitive magnetic field sensor (L) configured to detect a force component Fx1 in a longitudinal direction X that is defined by a direction of longitudinal extension of the second portion (5), and at least one Z-direction sensitive magnetic field sensor (L) configured to detect a force component Fz1 in a vertical direction Z, that is substantially perpendicular to the longitudinal direction X and perpendicular to the transversal direction Y of longitudinal extension of the at least one out of the first and second pin (8, 9).

2. The sensor assembly of claim 1, wherein the first through hole (3) and the third through hole (6) are configured such that they encompass the first pin (8) in a positive-fitting manner.

3. The sensor assembly of anyone of the preceding claims, wherein the second pin (9) is encompassed by the second through hole (4) in a positive-fitted manner and the fourth through hole (7) is configured such that the second pin (9) has one additional degree of freedom of movement within the fourth through hole (7).

4. The sensor assembly of claim 3, wherein the at least one additional degree of freedom comprises a translational degree of freedom that extends in the longitudinal direction X.

5. The sensor assembly of any one of the preceding claims, wherein the first and/or the second pin (8, 9) comprises a first magneto-elastically active region (21) and a second magneto-elastically active region (22), which are directly or indirectly attached to or form parts of the pin (8, 9) in such a manner that the mechanic stress is transmitted to the magneto-elastically active regions, each magneto-elastically active region comprising a magnetically polarized region, particularly wherein the magnetic polarization of the first magneto-elastically active region and the magnetic polarization of the second magneto-elastically active region are substantially opposite to each other, and wherein the magnetic field sensor means comprises at least one first direction sensitive magnetic field sensor (Lx1, Lz1) being arranged approximate the first magneto-elastically active region (21) for outputting a first signal corresponding to a stress-induced magnetic flux emanating from the first magnetically polarized region and the magnetic sensor means comprises at least one second direction sensitive magnetic field sensor (Lx2, Lz2) being arranged approximate the second magneto-elastically active region (22) for outputting a second signal corresponding to a stress-induced magnetic flux emanating from the second magnetically polarized region.

6. The sensor assembly of claim 5, wherein the first and/or the second pin (8, 9) comprises:
at least one first X-direction sensitive magnetic field sensor (Lx11, Lx12) configured to detect a force component Fx1 in the first magneto-elastically active region in the longitudinal direction X, and/or
at least one second X-direction sensitive magnetic field sensor (Lx21, Lx22) configured to detect a force component Fx2 in the second magneto-elastically active region in the longitudinal direction X and/or
at least one first Z-direction sensitive magnetic field sensor (Lz11, Lz12) configured to detect a force component Fz1 in the first magneto-elastically active region in the vertical direction Z, and/or
at least one second Z-direction sensitive magnetic field sensor (Lz21, Lz22) configured to detect a force component Fz2 in the second magneto-elastically active region in the vertical direction Z.

7. The sensor assembly of claim 6, wherein the first pin (8) comprises the at least one first Z-direction sensitive magnetic field sensor (Lz11) and the at least one second Z-direction sensitive magnetic field sensor (Lz21).

8. The sensor assembly of claim 7, wherein the first pin (8) comprises the at least one first X-direction sensitive magnetic field sensor (Lx11), the at least one second X-direction sensitive magnetic field sensor (Lx21), and wherein the second pin (9) comprises the at least one first Z-direction sensitive magnetic field sensor (Lz12) and the at least one second Z-direction sensitive magnetic field sensor (Lz22).

9. The sensor assembly of claim 8, wherein the second pin (9) comprises the at least one first X-direction sensitive magnetic field sensor (Lx12), and the at least one second X-direction sensitive magnetic field sensor (Lx22).

10. The sensor assembly of any one of the preceding claims, wherein the second portion (5) comprises a center wall (13) extending in the longitudinal direction X and the vertical direction Z, the third and fourth through hole (6, 7) extending through the center wall (13).

11. The sensor assembly of any one of the preceding claims, wherein the first and/or second pin (8, 9) is fixedly attached in a predetermined position to the first portion (2).

12. The sensor assembly of any one of the preceding claims, wherein the first portion (2) has a yoke-like shape, wherein yoke legs (11) of the first portion (2) comprise the first and second through holes (3, 4), and wherein the second portion (5) has a tubular shape, wherein side walls of the second portion (5) comprise the third and fourth through holes (6,7),.

13. The sensor assembly of claim 10, wherein the first portion (2) has a yoke-like shape, wherein the yoke legs (11) of the first portion (2) comprise the first and second through holes (3, 4), and wherein the center wall (13) comprises the third and fourth through holes (6, 7), particularly wherein side walls (14) of the second portion (5) comprise through holes in side walls that are larger than the third and fourth through holes (6, 7), such that the shear forces are introduced into the pins (8, 9) by abutment surfaces of the first and second through holes (3, 4) in the yoke legs (11) and abutment surfaces of the third and fourth through holes (6, 7) in the center wall (13).

14. A tow coupling (100) comprising the sensor assembly (1) of any one of the preceding claims, wherein the first portion is a hitch assembly configured to be attached to a car chassis (101), and wherein the second portion (5) is a towing hook or a receiving tube configured to receive a draw bar (102) of the tow coupling.

## Patentansprüche

1. Sensorbaugruppe (1) zur Kraftaufnahme, mit: einem ersten Abschnitt (2), der eine erste (3) und eine zweite Durchgangsbohrung (4) hat, einem zweiten Abschnitt (5), der eine dritte (6) und eine vierte Durchgangsbohrung (7) hat, wobei die dritte und die vierte Durchgangsbohrung (6, 7) mit der ersten bzw. der zweiten Durchgangsbohrung (3, 4) übereinstimmend positioniert sind, wobei die Sensorbaugruppe (1) ferner einen ersten Stift (8) und einen zweiten Stift (9) umfasst, wobei der erste Stift (8) so angeordnet ist, dass er sich durch die erste und die dritte Durchgangsbohrung (3, 6) erstreckt, und der zweite Stift (9) so angeordnet ist, dass er sich durch die zweite und die vierte Durchgangsbohrung (4, 7) erstreckt, um den ersten Abschnitt (2) an den zweiten Abschnitt (5) zu koppeln, wobei der erste und der zweite Stift (8, 9) wenigstens einen magnetoelastisch aktiven Bereich (10) umfassen, der unmittelbar oder mittelbar derart an dem Stift (8, 9) befestigt ist oder einen Teil davon bildet, dass eine mechanische Belastung des Stiftes auf den magnetoelastisch aktiven Bereich (10) übertragen wird, wobei der magnetoelastisch aktive Bereich wenigstens einen magnetisch polarisierten Bereich umfasst, derart, dass eine Polarisation des polarisierten Bereichs mit Zunahme der aufgebrachten Belastung zunehmend spiralförmig wird; und eine Magnetfeldsensoreinrichtung, die in der Nähe des wenigstens einen magnetoelastisch aktiven Bereichs (10) angeordnet ist, um ein Signal auszugeben, das einem belastungsinduzierten Magnetfluss entspricht, der von dem magnetisch polarisierten Bereich ausgeht, wobei die Magnetfeldsensoreinrichtung wenigstens einen richtungsempfindlichen Magnetfeldsensor (L) umfasst, der zur Bestimmung einer Scherkraft in wenigstens einer Richtung eingerichtet ist, wobei der wenigstens eine richtungsempfindliche Magnetfeldsensor (L) so eingerichtet ist, dass er Kraftkomponenten von Scherkräften erfasst, die von dem ersten Abschnitt (2) und dem zweiten Abschnitt (5) in die Stifte (8, 9) eingeleitet werden, wobei der wenigstens eine richtungsempfindliche Magnetfeldsensor (L) insbesondere so angeordnet ist, dass er eine vorbestimmte und feste räumliche Koordination mit dem Stift (8, 9) aufweist, und wobei der Stift (8, 9), der den wenigstens einen richtungsempfindlichen Magnetfeldsensor (L) umfasst, wenigstens teilweise hohl ist und der wenigstens eine richtungsempfindliche Magnetfeldsensor (L) im Inneren des Stiftes (8, 9) angeordnet ist;
wobei der erste und/oder der zweite Stift (8, 9) Folgendes umfasst/umfassen: wenigstens einen in X-Richtung empfindlichen Magnetfeldsensor (L), der so eingerichtet ist, dass er eine Kraftkomponente Fx1 in einer Längsrichtung X erfasst, die durch eine Richtung der Längserstreckung des zweiten Abschnitts (5) definiert ist, und wenigstens einen in Z-Richtung empfindlichen Magnetfeldsensor (L), der so eingerichtet ist, dass er eine Kraftkomponente Fz1 in einer vertikalen Richtung Z erfasst, die im Wesentlichen senkrecht zur Längsrichtung X und senkrecht zur Querrichtung Y der Längserstreckung des ersten und/oder des zweiten Stiftes (8, 9) ist.

2. Sensorbaugruppe nach Anspruch 1, wobei die erste Durchgangsbohrung (3) und die dritte Durchgangsbohrung (6) so ausgebildet sind, dass sie den ersten Stift (8) formschlüssig umschließen.

3. Sensorbaugruppe nach einem der vorhergehenden Ansprüche, wobei der zweite Stift (9) von der zweiten Durchgangsbohrung (4) formschlüssig umschlossen ist und die vierte Durchgangsbohrung (7) so ausgebildet ist, dass der zweite Stift (9) einen zusätzlichen Bewegungsfreiheitsgrad innerhalb der vierten Durchgangsbohrung (7) hat.

4. Sensorbaugruppe nach Anspruch 3, wobei der wenigstens eine zusätzliche Freiheitsgrad einen translatorischen Freiheitsgrad umfasst, der sich in Längsrichtung X erstreckt.

5. Sensorbaugruppe nach einem der vorhergehenden Ansprüche, wobei der erste und/oder der zweite Stift (8, 9) einen ersten magnetoelastisch aktiven Bereich (21) und einen zweiten magnetoelastisch aktiven Bereich (22) umfasst, die unmittelbar oder mittelbar derart an dem Stift (8, 9) befestigt sind oder Teile davon bilden, dass die mechanische Belastung auf die magnetoelastisch aktiven Bereiche übertragen wird, wobei jeder magnetoelastisch aktive Bereich einen magnetisch polarisierten Bereich umfasst, insbesondere wobei die magnetische Polarisation des ersten magnetoelastisch aktiven Bereichs und die magnetische Polarisation des zweiten magnetoelastisch aktiven Bereichs im Wesentlichen entgegengesetzt zueinander sind, und wobei die Magnetfeldsensoreinrichtung wenigstens einen ersten richtungsempfindlichen Magnetfeldsensor (Lx1, Lz1) umfasst, der in der Nähe des ersten magnetoelastisch aktiven Bereichs (21) angeordnet ist, um ein erstes Signal auszugeben, das einem belastungsinduzierten Magnetfluss entspricht, der von dem ersten magnetisch polarisierten Bereich ausgeht, und die Magnetsensoreinrichtung wenigstens einen zweiten richtungsempfindlichen Magnetfeldsensor (Lx2, Lz2) umfasst, der in der Nähe des zweiten magnetoelastisch aktiven Bereichs (22) angeordnet ist, um ein zweites Signal auszugeben, das einem belastungsinduzierten Magnetfluss entspricht, der von dem zweiten magnetisch polarisierten Bereich ausgeht.

6. Sensorbaugruppe nach Anspruch 5, wobei der erste und/oder der zweite Stift (8, 9) Folgendes umfasst/umfassen:
wenigstens einen ersten in X-Richtung empfindlichen Magnetfeldsensor (Lx11, Lx12), der so eingerichtet ist, dass er eine Kraftkomponente Fx1 im ersten magnetoelastisch aktiven Bereich in Längsrichtung X erfasst, und/oder
wenigstens einen zweiten in X-Richtung empfindlichen Magnetfeldsensor (Lx21, Lx22), der so eingerichtet ist, dass er eine Kraftkomponente Fx2 im zweiten magnetoelastisch aktiven Bereich in Längsrichtung X erfasst, und/oder
wenigstens einen ersten in Z-Richtung empfindlichen Magnetfeldsensor (Lz11, Lz12), der so eingerichtet ist, dass er eine Kraftkomponente Fz1 im ersten magnetoelastisch aktiven Bereich in vertikaler Richtung Z erfasst, und/oder
wenigstens einen zweiten in Z-Richtung empfindlichen Magnetfeldsensor (Lz21, Lz22), der so eingerichtet ist, dass er eine Kraftkomponente Fz2 im zweiten magnetoelastisch aktiven Bereich in vertikaler Richtung Z erfasst.

7. Sensorbaugruppe nach Anspruch 6, wobei der erste Stift (8) den wenigstens einen ersten in Z-Richtung empfindlichen Magnetfeldsensor (Lz11) und den wenigstens einen zweiten in Z-Richtung empfindlichen Magnetfeldsensor (Lz21) umfasst.

8. Sensorbaugruppe nach Anspruch 7, wobei der erste Stift (8) den wenigstens einen ersten in X-Richtung empfindlichen Magnetfeldsensor (Lx11) und den wenigstens einen zweiten in X-Richtung empfindlichen Magnetfeldsensor (Lx21) umfasst und wobei der zweite Stift (9) den wenigstens einen ersten in Z-Richtung empfindlichen Magnetfeldsensor (Lz12) und den wenigstens einen zweiten in Z-Richtung empfindlichen Magnetfeldsensor (Lz22) umfasst.

9. Sensorbaugruppe nach Anspruch 8, wobei der zweite Stift (9) den wenigstens einen ersten in X-Richtung empfindlichen Magnetfeldsensor (Lx12) und den wenigstens einen zweiten in X-Richtung empfindlichen Magnetfeldsensor (Lx22) umfasst.

10. Sensorbaugruppe nach einem der vorhergehenden Ansprüche, wobei der zweite Abschnitt (5) eine Mittelwand (13) umfasst, die sich in Längsrichtung X und in vertikaler Richtung Z erstreckt, wobei sich die dritte und die vierte Durchgangsbohrung (6, 7) durch die Mittelwand (13) erstrecken.

11. Sensorbaugruppe nach einem der vorhergehenden Ansprüche, wobei der erste und/oder der zweite Stift (8, 9) in einer vorbestimmten Position fest am ersten Abschnitt (2) angebracht ist.

12. Sensorbaugruppe nach einem der vorhergehenden Ansprüche, wobei der erste Abschnitt (2) eine jochartige Gestalt hat, wobei Jochschenkel (11) des ersten Abschnitts (2) die erste und die zweite Durchgangsbohrung (3, 4) aufweisen, und wobei der zweite Abschnitt (5) eine rohrförmige Gestalt hat, wobei Seitenwände des zweiten Abschnitts (5) die dritte und die vierte Durchgangsbohrung (6, 7) aufweisen.

13. Sensorbaugruppe nach Anspruch 10, wobei der erste Abschnitt (2) eine jochartige Gestalt hat, wobei die Jochschenkel (11) des ersten Abschnitts (2) die erste und die zweite Durchgangsbohrung (3, 4) aufweisen und wobei die Mittelwand (13) die dritte und die vierte Durchgangsbohrung (6, 7) aufweist, insbesondere wobei Seitenwände (14) des zweiten Abschnitts (5) Durchgangsbohrungen in Seitenwänden aufweisen, die größer als die dritte und die vierte Durchgangsbohrung (6, 7) sind, derart, dass die Scherkräfte über Anlageflächen der ersten und der zweiten Durchgangsbohrung (3, 4) in den Jochschenkeln (11) und Anlageflächen der dritten und der vierten Durchgangsbohrung (6, 7) in der Mittelwand (13) in die Stifte (8, 9) eingeleitet werden.

14. Anhängekupplung (100), die die Sensorbaugruppe (1) nach einem der vorhergehenden Ansprüche umfasst, wobei der erste Abschnitt eine Anhängerkupplungsbaugruppe ist, die zur Befestigung an einem Fahrzeugfahrgestell (101) eingerichtet ist, und wobei der zweite Abschnitt (5) ein Anhängehaken oder ein Aufnahmerohr ist, der bzw. das zur Aufnahme einer Deichsel (102) der Anhängekupplung eingerichtet ist.

## Revendications

1. Ensemble capteur (1) de détection de force, comprenant : un premier tronçon (2) qui présente un premier (3) et un deuxième trou de passage (4), un deuxième tronçon (5) qui présente un troisième (6) et un quatrième trou de passage (7), le troisième et le quatrième trou de passage (6, 7) étant positionnés de manière à être en correspondance avec le premier et le deuxième trou de passage (3, 4), l'ensemble capteur (1) comprenant en outre une première goupille (8) et une deuxième goupille (9), la première goupille (8) étant agencée de manière à s'étendre à travers le premier et le troisième trou de passage (3, 6), et la deuxième goupille (9) étant agencée de manière à s'étendre à travers le deuxième et le quatrième trou de passage (4, 7) pour coupler le premier tronçon (2) et le deuxième tronçon (5), la première et la deuxième goupille (8, 9) comprenant une zone magnéto-élastiquement active (10) qui est directement ou indirectement raccordée à ou forme une partie de la goupille (8, 9) de telle sorte qu'une charge mécanique sur la goupille est transmise à la zone magnéto-élastiquement active (10), la zone magnéto-élastiquement active comprenant au moins une zone magnétiquement polarisée de telle sorte qu'une polarisation de la zone polarisée devient de plus en plus hélicoïdale lorsque la charge appliquée augmente ; et un moyen capteur de champ magnétique agencé à proximité de ladite au moins une zone magnéto-élastiquement active (10) pour sortir un signal correspondant à un flux magnétique induit par une charge et provenant de la zone magnétiquement polarisée, le moyen capteur de champ magnétique comprenant au moins un capteur de champ magnétique (L) sensible à la direction qui est réalisé pour la détermination d'une force de cisaillement dans au moins une direction, ledit au moins un capteur de champ magnétique (L) sensible à la direction étant réalisé pour la détection de composantes de force de forces de cisaillement introduites dans les goupilles (8, 9) par le premier tronçon (2) et le deuxième tronçon (5), ledit au moins un capteur de champ magnétique (L) sensible à la direction étant en particulier agencé de manière à présenter une coordination spatiale fixe et prédéterminée avec la goupille (8, 9), et la goupille (8, 9) comprenant ledit au moins un capteur de champ magnétique (L) sensible à la direction étant au moins partiellement creux, et ledit au moins un capteur de champ magnétique (L) sensible à la direction étant agencé dans l'intérieur de la goupille (8, 9) ;
la première et/ou la deuxième goupille (8, 9) comprenant : au moins un capteur de champ magnétique (L) sensible à la direction X qui est réalisé de manière à détecter une composante de force Fx1 dans une direction longitudinale X qui est définie par une direction d'extension longitudinale du deuxième tronçon (5), et au moins un capteur de champ magnétique (L) sensible à la direction Z qui est réalisé de manière à détecter une composante de force Fz1 dans une direction verticale Z sensiblement perpendiculaire à la direction longitudinale X et perpendiculaire à la direction transversale Y de l'extension longitudinale de la première et/ou de la deuxième goupille (8, 9).

2. Ensemble capteur selon la revendication 1, le premier trou de passage (3) et le troisième trou de passage (6) étant réalisés de manière à entourer la première goupille (8) par engagement positif.

3. Ensemble capteur selon l'une des revendications précédentes, la deuxième goupille (9) étant entourée par engagement positif par le deuxième trou de passage (4), et le quatrième trou de passage (7) étant réalisé de telle sorte que la deuxième goupille (9) présente un degré de liberté de mouvement supplémentaire dans le quatrième trou de passage (7).

4. Ensemble capteur selon la revendication 3, dans lequel ledit au moins un degré de liberté supplémentaire comprend un degré de liberté en translation qui s'étend dans la direction longitudinale X.

5. Ensemble capteur selon l'une des revendications précédentes, la première et/ou la deuxième goupille (8, 9) comprenant une première zone magnéto-élastiquement active (21) et une deuxième zone magnéto-élastiquement active (22) qui sont directement ou indirectement raccordées à ou forment des parties de la goupille (8, 9) de telle sorte que la charge mécanique est transmise aux zones magnéto-élastiquement actives, chaque zone magnéto-élastiquement active comprenant une zone magnétiquement polarisée, la polarisation magnétique de la première zone magnéto-élastiquement active et la polarisation magnétique de la deuxième zone magnéto-élastiquement active étant en particulier sensiblement opposées l'une à l'autre, et le moyen capteur de champ magnétique comprenant au moins un premier capteur de champ magnétique (Lx1, Lz1) sensible à la direction qui est agencé à proximité de la première zone magnéto-élastiquement active (21) pour sortir un premier signal correspondant à un flux magnétique induit par une charge et provenant de la première zone magnétiquement polarisée, et le moyen capteur magnétique comprenant au moins un deuxième capteur de champ magnétique (Lx2, Lz2) sensible à la direction qui est agencé à proximité de la deuxième zone magnéto-élastiquement active (22) pour sortir un deuxième signal correspondant à un flux magnétique induit par une charge et provenant de la deuxième zone magnétiquement polarisée.

6. Ensemble capteur selon la revendication 5, la première et/ou la deuxième goupille (8, 9) comprenant :
au moins un premier capteur de champ magnétique (Lx11, Lx12) sensible à la direction X, qui est réalisé de manière à détecter une composante de force Fx1 dans la première zone magnéto-élastiquement active dans la direction X, et/ou
au moins un deuxième capteur de champ magnétique (Lx21, Lx22) sensible à la direction X, qui est réalisé de manière à détecter une composante de force Fx2 dans la deuxième zone magnéto-élastiquement active dans la direction longitudinale X, et/ou
au moins un premier capteur de champ magnétique (Lz11, Lz12) sensible à la direction Z, qui est réalisé de manière détecter une composante de force Fz1 dans la première zone magnéto-élastiquement active dans la direction verticale Z, et/ou
au moins un deuxième capteur de champ magnétique (Lz21, Lz22) sensible à la direction Z, qui est réalisé de manière à détecter une composante de force Fz2 dans la deuxième zone magnéto-élastiquement active dans la direction verticale Z.

7. Ensemble capteur selon la revendication 6, la première goupille (8) comprenant ledit au moins un premier capteur de champ magnétique (Lz11) sensible à la direction Z et ledit au moins un deuxième capteur de champ magnétique (Lz21) sensible à la direction Z.

8. Ensemble capteur selon la revendication 7, la première goupille (8) comprenant ledit au moins un premier capteur de champ magnétique (Lx11) sensible à la direction X, ledit au moins un deuxième capteur de champ magnétique (Lx21) sensible à la direction X, et la deuxième goupille (9) comprenant ledit au moins un premier capteur de champ magnétique (Lz12) sensible à la direction Z et ledit au moins un deuxième capteur de champ magnétique (Lz22) sensible à la direction Z.

9. Ensemble capteur selon la revendication 8, la deuxième goupille (9) comprenant ledit au moins un premier capteur de champ magnétique (Lx12) sensible à la direction X et ledit au moins un deuxième capteur de champ magnétique (Lx22) sensible à la direction X.

10. Ensemble capteur selon l'une des revendications précédentes, le deuxième tronçon (5) comprenant une paroi médiane (13) qui s'étend dans la direction longitudinale X et la direction verticale Z, le troisième et le quatrième trou de passage (6, 7) s'étendant à travers la paroi médiane (13).

11. Ensemble capteur selon l'une des revendications précédentes, la première et/ou la deuxième goupille (8, 9) étant montée(s) de manière solidaire dans une position prédéterminée sur le premier tronçon (2).

12. Ensemble capteur selon l'une des revendications précédentes, le premier tronçon (2) présentant une forme de culasse, les branches de culasse (11) du premier tronçon (2) comprenant le premier et le deuxième trou de passage (3, 4), et le deuxième tronçon (5) présentant une forme tubulaire, des parois latérales du deuxième tronçon (5) comprenant le troisième et le quatrième trou de passage (6, 7).

13. Ensemble capteur selon la revendication 10, le premier tronçon (2) présentant une forme de culasse, les branches de culasse (11) du premier tronçon (2) comprenant le premier et le deuxième trou de passage (3, 4), et la paroi médiane (13) comprenant le troisième et le quatrième trou de passage (6, 7), des parois latérales (14) du deuxième tronçon (5) comprenant en particulier des trous de passage dans des parois latérales qui sont plus grands que le troisième et le quatrième trou de passage (6, 7), de sorte que les forces de cisaillement sont introduites dans les goupilles (8, 9) par des surfaces de butée du premier et du deuxième trou de passage (3, 4,) dans les branches de culasse (11) et des surfaces de butée du troisième et du quatrième trou de passage (6, 7) dans la paroi médiane (13).

14. Attache de remorque (100), comprenant l'ensemble capteur (1) selon l'une des revendications précédentes, le premier tronçon étant un ensemble d'attelage aménagé pour la fixation à un châssis de véhicule (101), et le deuxième tronçon (5) étant un crochet d'attelage ou un tube de logement réalisé pour la réception d'une barre de traction (102) de l'attache de remorque.
